(19) Europäisches Patentamt
European Patent Office
Office européen des brevets

(11) Veröffentlichungsnummer: **0 006 213**
**B1**

(12) **EUROPÄISCHE PATENTSCHRIFT**

(45) Veröffentlichungstag der Patentschrift: **01.09.82**

(51) Int. Cl.$^3$: **C 08 K 5/34,** C 09 D 7/12

(21) Anmeldenummer: **79101891.4**

(22) Anmeldetag: **11.06.79**

(54) **Lichtstabilisierung von sauerkatalysierten Einbrennlacken.**

(30) Priorität: **21.06.78 CH 6752/78**

(43) Veröffentlichungstag der Anmeldung:
**09.01.80 Patentblatt 80/1**

(45) Bekanntmachung des Hinweises auf die Patenterteilung:
**01.09.82 Patentblatt 82/35**

(84) Benannte Vertragsstaaten:
**BE CH DE FR GB IT NL SE**

(56) Entgegenhaltungen:
EP - A - 0 002 753
DE - A - 2 623 422
FR - A - 2 257 670
FR - A - 2 333 821
GB - A - 1 196 224

Die Akte enthält technische Angaben die nach dem Eingang der Anmeldung eingereicht wurden und die nicht in dieser Patentschrift enthalten sind.

(73) Patentinhaber: **CIBA-GEIGY AG**
**Patentabteilung Postfach**
**CH-4002 Basel (CH)**

(72) Erfinder: **Berner, Godwin, Dr.**
**Oetlingerstrasse 2**
**CH-4057 Basel (CH)**

EP 0 006 213 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Lichtstabilisierung von sauerkatalysierten Einbrennlacken

Die vorliegende Erfindung befasst sich mit dem Stabilisieren von sauerkatalysierten Einbrennlacken auf der Basis heissvernetzbarer Acryl-, Polyester- oder Alkydharze gegen die Einwirkung von Licht und Feuchtigkeit durch den Zusatz von N-substituierten Polyalkylpiperidinderivaten sowie mit den so stabilisierten sauerkatalysierten Einbrennlacken.

Von Fall zu Fall, insbesondere aber bei Ausbesserungslackierungen und festkörperreichen Lacken für den Industrielacksektor, werden Einbrennlacksysteme auf der Basis heissvernetzbarer Acryl-, Polyester- oder Alkydharze mit einem zusätzlichen Säurekatalysator versehen. Hierbei werden Ausfällerscheinungen durch Salzbildung zwischen Lichtschutzmittel und Säurekatalysator, Härtungsverzögerungen, Pigmentflocculationen sowie eine reduzierte Lichtschutzwirkung beobachtet.

Es wurde nun gefunden, dass durch Zusatz von N-substituierten Polyalkylpiperidinderivaten, gegebenenfalls zusammen mit weiteren Stabilisatoren, diese Probleme befriedigend gelöst werden können.

Die vorliegende Erfindung betrifft daher die Verwendung von N-substituierten 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von sauerkatalysierten Einbrennlacken auf der Basis heissvernetzbarer Acryl-, Polyester oder Alkydharze, insbesondere Acryl- oder Alkydharze, gegen die Einwirkung von Licht, Feuchtigkeit und Sauerstoff.

Die erfindungsgemäss zu verwendenden N-substituierten 2,2,6,6-Tetraalkylpiperidinverbindungen sind allgemein bekannt und werden bereits gegen Lichtabbau eingesetzt. Es handelt sich dabei beispielsweise um Verbindungen, die eine Gruppe der Formel (I)

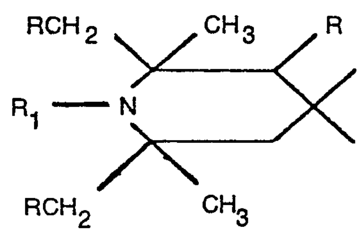

(I)

enthalten, oder um Polymere, deren wiederkehrende Struktureinheiten eine Gruppe der Formel I enthalten oder über eine bivalente Gruppe entsprechend der Formel I, worin $R_1$ eine freie Valenz bedeutet, verbunden sind, wobei im übrigen R Wasserstoff oder Methyl und $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl bedeuten.

Zu den erfindungsgemäss zu verwendenden Lichtschutzmitteln gehören insbesondere folgende Verbindungsklassen:

a) Lichtschutzmittel der Formel (II)

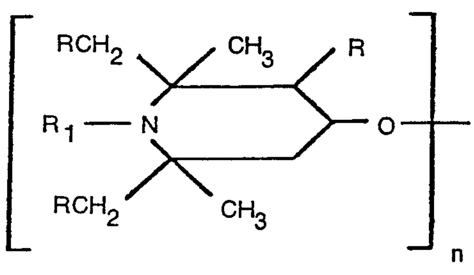

(II)

worin n die Zahlen 1—4, vorzugsweise 1 oder 2 bedeutet, R die für Formel (I) angegebene Bedeutung hat, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl, vorzugsweise $C_1$—$C_{12}$ Alkyl, Allyl, Benzyl, Acetyl, Acryloyl ist, und $R_2$, wenn n = 1, Wasserstoff, $C_1$—$C_{12}$ Alkyl, Cyanäthyl, Benzyl, Glycidyl, einen einwertigen Rest einer gesättigten oder ungesättigten aliphatischen, cycloaliphatischen, araliphatischen oder aromatischen Carbonsäure, Carbaminsäure oder Phosphor enthaltenden Säure oder einen einwertigen Silylrest, vorzugsweise einen Rest einer aliphatischen Carbonsäure mit 2—18 C-Atomen, einer cycloaliphatischen Carbonsäure mit 5—12 C-Atomen oder einer aromatischen Carbonsäure mit 7—15 C-Atomen, wenn n = 2, $C_2$—$C_{12}$ Alkylen, $C_4$—$C_{12}$ Alkenylen, Xylylen, einen zweiwertigen Rest einer gesättigten oder ungesättigten aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2—12 C-Atomen, einer cycloaliphatischen oder aromatischen Dicarbonsäure mit

8—14 C-Atomen, einer aliphatischen, cycloaliphatischen oder aromatischen Dicarbaminsäure mit 8—14 C-Atomen, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, wenn n = 4, einen vierwertigen Rest einer aliphatischen, cycloaliphatischen oder aromatischen Tetracarbonsäure bedeutet.

Bedeuten etwaige Substituenten $C_1$—$C_{12}$ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

$R_1$ in der Bedeutung von $C_1$—$C_{18}$ Alkyl kann z.B. die oben angeführten Gruppen und dazu noch beispielsweise n-Tridecyl, n-Tetradecyl, n-Hexadecyl oder n-Octadecyl darstellen.

Stellt $R_1$ $C_1$—$C_6$ Hydroxyalkyl dar, so bedeutet es insbesondere $C_1$—$C_4$ Hydroxyalkyl und bevorzugt 2-Hydroxyäthyl und 2-Hydroxy-n-butyl.

Wenn $R_1$ $C_3$—$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R_1$ ist als $C_3$—$C_8$ Alkinyl bevorzugt Propargyl.

Als $C_7$—$C_{12}$ Aralkyl ist $R_1$ insbesondere Phenäthyl oder vor allem Benzyl und als im Alkylteil durch Hydroxy substituiertes Aralkyl insbesondere 2-Hydroxyphenäthyl.

$R_1$ ist als $C_1$—$C_8$ Alkanoyl beispielsweise Formyl, Propionyl, Butyryl, Octanoyl, aber bevorzugt Acetyl und als $C_3$—$C_5$ Alkenoyl insbesondere Acryloyl.

Bedeutet $R_2$ einen einwertigen Rest einer Carbonsäure, so stellt es beispielsweise einen Essigsäure-, Stearinsäure-, Salicylsäure-, Methacrylsäure-, Benzoe- oder $\beta$-(3,5-Di-tert.-butyl-4-hydroxyphenyl)-propionsäurerest dar.

Bedeutet $R_2$ einen zweiwertigen Rest einer Dicarbonsäure, so stellt es beispielsweise einen Maleinsäure-, Adipinsäure-, Suberinsäure-, Sebacinsäure-, Phthalsäure-, Dibutylmalonsäure-, Dibenzylmalonsäure oder Butyl-(3,5-di-tert.-butyl-4-hydroxybenzyl)-malonsäurerest dar.

Stellt $R_2$ einen dreiwertigen Rest einer Tricarbonsäure dar, so bedeutet es z.B. einen Trimellithsäurerest.

Stellt $R_2$ einen vierwertigen Rest einer Tetracarbonsäure dar, so bedeutet es z.B. einen Pyromellithsäurerest.

Bedeutet $R_2$ einen zweiwertigen Rest einer Dicarbaminsäure, so stellt es beispielsweise einen Hexamethylen-dicarbaminsäure- oder einen 2,4-Toluylen-dicarbaminsäurerest dar.

Beispiele für Polyalkylpiperidin-Lichtschutzmittel dieser Klase sind folgende Verbindungen:

1 4-Hydroxy-1,2,2,6,6-pentamethylpiperidin
2 1-Allyl-4-hydroxy-2,2,6,6-tetramethylpiperidin
3 1-Benzyl-4-hydroxy-2,2,6,6-tetramethylpiperidin
4 1-(4-tert.-Butyl-2-butenyl)-4-hydroxy-2,2,6,6-tetramethylpiperidin
5 1-Aethyl-4-salicyloyloxy-2,2,6,6-tetramethylpiperidin
6 4-Methacryloyloxy-1,2,2,6,6-pentamethylpiperidin
7 1,2,2,6,6-Pentamethylpiperidin-4-yl-$\beta$-(3,5-di-tert.-butyl-4-hydroxyphenyl)-propionat
8 1-Benzyl-2,2,6,6-tetramethyl-4-piperidinyl-maleinat
9 Di-(1,2,3,6-tetramethyl-2,6-diäthyl-piperidin-4-yl)-sebacat
10 Di-(1,2,2,6,6-pentamethyl-piperidin-4-yl)-sebacat
11 Di-(1-allyl-2,2,6,6-tetramethyl-piperidin-4-yl)-sebacat
12 Di-(1-allyl-2,2,6,6-tetramethyl-piperidin-4-yl)-phthalat
13 Di-(1,2,2,6,6,-pentamethyl-piperidin-4-yl)-adipat
14 Di-(1-allyl-2,2,6,6-tetramethyl-piperidin-4-yl)-adipat
15 1-Propargyl-4-$\beta$-cyanoäthyloxy-2,2,6,6-tetramethyl-piperidin
16 1-Acetyl-2,2,6,6-tetramethylpiperidin-4-yl-acetat
17 1-Acryloyl-4-benzyloxy-2,2,6,6-tetramethylpiperidin
18 Dibutyl-malonsäure-di-(1,2,2,6,6-pentamethylpiperidin-4-yl)-ester
19 Butyl-(3,5-di-tert.-butyl-4-hydroxybenzyl)-malonsäure-di-(1,2,2,6,6-pentamethylpiperidin-4-yl)-ester
20 Dibenzyl-malonsäure-di-(1,2,2,6,6-pentamethylpiperidin-4-yl)-ester
21 Dibenzyl-malonsäure-di-(1,2,3,6-tetramethyl-2,6-diäthyl-piperidin-4-yl)-ester
22 Hexan-1',6'-bis-(4-carbamoyloxy-1-n-butyl-2,2,6,6-tetramethylpiperidin)
23 Toluol-2',4'-bis-(4-carbamoyloxy-1-n-propyl-2,2,6,6-tetramethylpiperidin)
24 Tris-(1-propyl-2,2,6,6-tetramethylpiperidin-4-yl)-phosphit
25 Tris-(1-propyl-2,2,6,6-tetramethylpiperidin-4-yl)-phosphat
26 Phenyl-[bis-(1,2,2,6,6-pentamethylpiperidin-4-yl)]-phosphonat

b) Lichtschutzmittel der Formel (III)

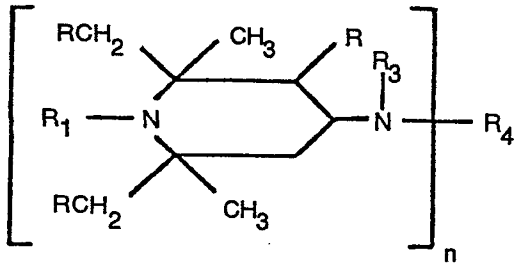

(III),

worin n die Zahlen 1 oder 2 bedeutet, R die für Formel I angegebene Bedeutung hat, $R_1$ die unter a) angegebene Bedeutung hat, $R_3$ $C_1$—$C_{12}$ Alkyl, $C_5$—$C_7$ Cycloalkyl, $C_7$—$C_8$ Aralkyl, $C_2$—$C_{18}$ Alkanoyl, $C_3$—$C_5$ Alkenoyl, Benzoyl ist und $R_4$, wenn n = 1, $C_1$—$C_{12}$ Alkyl, $C_5$—$C_7$ Cycloalkyl, gegebenenfalls mit einer Cyano-, Carbonyl- oder Carbamidgruppe substituiertes $C_2$—$C_8$ Alkenyl, Glycidyl, eine Gruppe der Formel $—CH_2—CH(OH)—Z$ oder der Formel —CONH—Z ist, worin Z Wasserstoff, Methyl oder Phenyl bedeutet, und, wenn n = 2, $C_2$—$C_{12}$ Alkylen, $C_6$—$C_{12}$ Arylen, Xylylen, eine $—CH_2—CH(OH)—CH_2—$ Gruppe oder eine Gruppe

$$—CH_2—CH(OH)—CH_2—O—X—O—CH_2—CH(OH)—CH_2—$$

bedeutet, worin X $C_2$—$C_{10}$ Alkylen, $C_6$—$C_{15}$ Arylen, $C_6$—$C_{12}$ Cycloalkylen ist, oder, vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure bedeuten kann, oder $R_3$ und $R_4$ zusammen, wenn n = 1, der cyclische Rest einer aliphatischen oder aromatischen 1,2- oder 1,3-Dicarbonsäure sein können.

Stellen etwaige Substituenten $C_1$—$C_{12}$ Alkyl dar, so haben sie die bereits unter a) angegebene Bedeutung.

Bedeuten etwaige Substituenten $C_5$—$C_7$ Cycloalkyl, so stellen sie insbesondere Cyclohexan dar.

Als $C_7$—$C_8$ Aralkyl ist $R_3$ insbesondere Phenäthyl oder vor allem Benzyl.

$R_3$ ist als $C_2$—$C_{18}$ Alkanoyl beispielsweise Propionyl, Butyryl, Octanoyl, Dodecanoyl, Hexadecanoyl, Octadecanoyl aber bevorzugt Acetyl und als $C_3$—$C_5$ Alkenoyl insbesondere Acryloyl.

Bedeutet $R_4$ ein gegebenenfalls mit einer Cyano-, Carbonyl- oder Carbamidgruppe substituiertes $C_2$—$C_8$ Alkenyl, dann handelt es sich z.B. um 1-Propenyl, Allyl, Methallyl, 2-Butenyl, 2-Pentenyl, 2-Hexenyl, 2-Octenyl, 2,2-Dicyanovinyl, 1-Methyl-2-cyano-2-methoxycarbonyl-vinyl, 2,2-Diacetylaminovinyl.

Stellen etwaige Substituenten $C_2$—$C_{12}$ Alkylen dar, so handelt es sich z.B. um Aethylen, Propylen, 2,2-Dimethylpropylen, Tetramethylen, Hexamethylen, Octamethylen, Decamethylen oder Dodecamethylen.

Bedeuten etwaige Substituenten $C_6$—$C_{15}$ Arylen, so stellen sie z.B. o-, m- oder p-Phenylen, 1,4-Naphthylen oder 4,4'-Diphenylen dar.

Als $C_6$—$C_{12}$ Cycloalkylen ist X insbesondere Cyclohexylen.

Beispiele für Polyalkylpiperidin-Lichtschutzmittel dieser Klasse sind folgende Verbindungen:

27 N,N'-Bis-(1,2,2,6,6-pentamethylpiperidin-4-yl)-hexamethylen-1,6-diacetamid

28 1-Acetyl-4-(N-cyclohexylacetamido)-2,2,6,6-tetramethylpiperidin

29 Die Verbindung der Formel

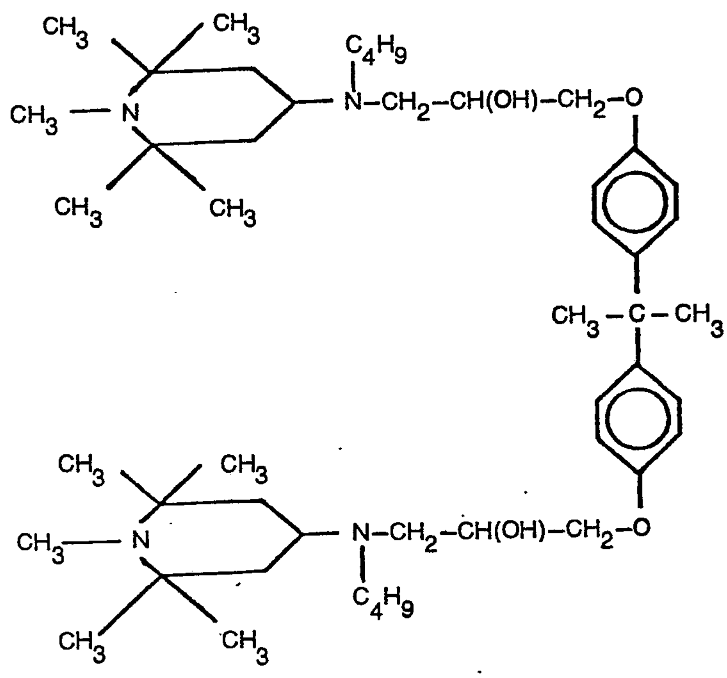

c) Lichtschutzmittel der Formel (IV)

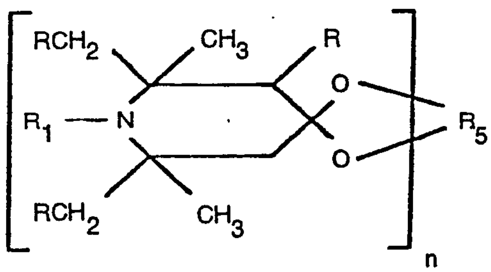

(IV)

worin n die Zahlen 1 oder 2 bedeutet, R die für Formel (I) angegebene Bedeutung hat, $R_1$ die unter a) angegebene Bedeutung hat und $R_5$, wenn n = 1, $C_2$—$C_8$ Alkylen oder Hydroxyalkylen, $C_4$—$C_{22}$ Acyloxyalkylen, wenn n = 2, die Gruppe $(—CH_2)_2C(CH_2—)_2$ bedeutet.

Bedeutet $R_5$ $C_2$—$C_8$ Alkylen oder Hydroxyalkylen, so stellt es beispielsweise Aethylen, 1-Methyläthylen, Propylen, 2-Aethyl-propylen, 2-Aethyl-2-hydroxymethyl-propylen dar.

Als $C_4$—$C_{22}$ Acyloxyalkylen bedeutet $R_5$ z.B. 2-Aethyl-2-acetoxymethyl-propylen.

Beispiele für Polyalkylpiperidin-Lichtschutzmittel dieser Klasse sind folgende Verbindungen:

33 8-Aza-2,7,7,8,9,9-hexamethyl-1,4-dioxyspiro-[4,5]decan
34 9-Aza-3-hydroxymethyl-3-äthyl-8,8,9,10,10-pentamethyl-1,5-dioxaspiro[5,5]undecan
35 9-Aza-3-äthyl-3-acetoxymethyl-9-acetyl-8,8,10,10-tetramethyl-1,5-dioxaspiro[5,5]undecan

d) Lichtschutzmittel der Formel (V)

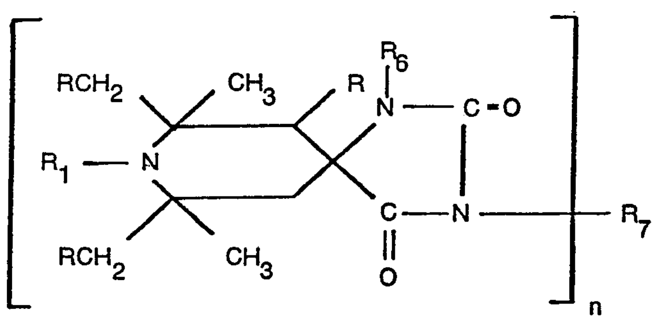

(V),

worin n die Zahlen 1 oder 2 bedeutet, R die für Formel (I) angegebene Bedeutung hat, $R_1$ die unter a) angegebene Bedeutung hat, $R_6$ Wasserstoff, $C_1$—$C_{12}$ Alkyl, Allyl, Benzyl, Glycidyl, $C_2$—$C_6$ Alkoxyalkyl

ist, und $R_7$, wenn n = 1, Wasserstoff, $C_1$—$C_{12}$ Alkyl, Glycidyl, $C_3$—$C_5$ Alkenyl, $C_7$—$C_9$ Aralkyl, $C_5$—$C_7$ Cycloalkyl, $C_2$—$C_4$ Hydroxyalkyl, $C_2$—$C_6$ Alkoxyalkyl, $C_6$—$C_{10}$ Aryl und, wenn n = 2, $C_2$—$C_{12}$ Alkylen, $C_6$—$C_{12}$ Arylen oder eine Gruppe $—CH_2CH(OZ')CH_2—(OCH_2—CH(OZ')CH_2)_2—$ bedeutet, worin Z' Wasserstoff, $C_1$—$C_{18}$ Alkyl, Allyl, Benzyl, $C_2$—$C_{12}$ Alkanoyl oder Benzoyl ist.

Bedeuten etwaige Substituenten $C_1$—$C_{12}$ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

Z' in der Bedeutung von $C_1$—$C_{18}$ Alkyl kann z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$—$C_6$ Alkoxyalkyl, so stellen sie z.B. Methoxymethyl, Aethoxymethyl, Propoxymethyl, tert.-Butoxymethyl, Aethoxyäthyl, Aethoxypropyl, n-Butoxyäthyl, tert.-Butoxyäthyl, Isopropoxyäthyl oder Propoxypropyl dar.

Stellt $R_7$ $C_3$—$C_5$ Alkenyl dar, so bedeutet es z.B. 1-Propenyl, Allyl, Methallyl, 2-Butenyl oder 2-Pentenyl.

Als $C_7$—$C_9$ Aralkyl ist $R_7$ insbesondere Phenäthyl oder vor allem Benzyl und als $C_5$—$C_7$ Cycloalkyl insbesondere Cyclohexyl.

Bedeutet $R_7$ $C_2$—$C_4$ Hydroxyalkyl, so stellt es z.B. 2-Hydroxyäthyl, 3-Hydroxypropyl oder 4-Hydroxybutyl dar.

Als $C_6$—$C_{10}$ Aryl bedeutet $R_7$ insbesondere Phenyl, $\alpha$- oder $\beta$-Naphthyl, die gegebenenfalls mit Halogen oder $C_1$—$C_4$ Alkyl substituiert sind.

Stellt $R_7$ $C_2$—$C_{12}$ Alkylen dar, so handelt es sich z.B. um Aethylen, Propylen, 2,2-Dimethylpropylen, Tetramethylen, Hexamethylen, Octamethylen, Decamethylen oder Dodecamethylen.

Bedeutet $R_7$ $C_6$—$C_{12}$ Arylen, so stellt es beispielsweise o-, m- oder p-Phenylen, 1,4-Naphthylen oder 4,4'-Diphenylen dar.

Bedeutet Z $C_2$—$C_{12}$ Alkanoyl, so stellt es beispielsweise Propionyl, Butyryl, Octanoyl, Dodecanoyl, aber bevorzugt Acetyl dar.

Beispiele für Polyalkylpiperidin-Lichtschutzmittel dieser Klasse sind folgende Verbindungen:

36 3-Benzyl-1,3,8-triaza-7,7-8,9,9-pentamethyl-spiro[4,5] decan-2,4-dion

37 3-n-Octyl-1,3,8-triaza-7,7,8,9,9-pentamethyl-spiro[4.5] decan-2,4-dion

38 3-Allyl-1,3,8-triaza-1,7,7,8,9,9-hexamethyl-spiro[4.5] decan-2,4-dion

oder die Verbindungen der folgenden Formeln:

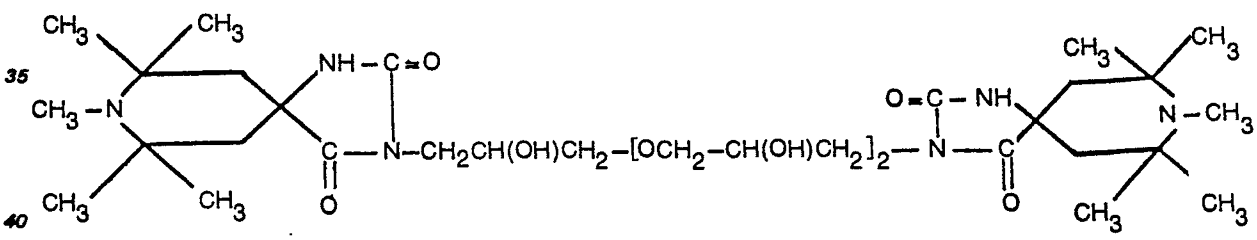

39

40

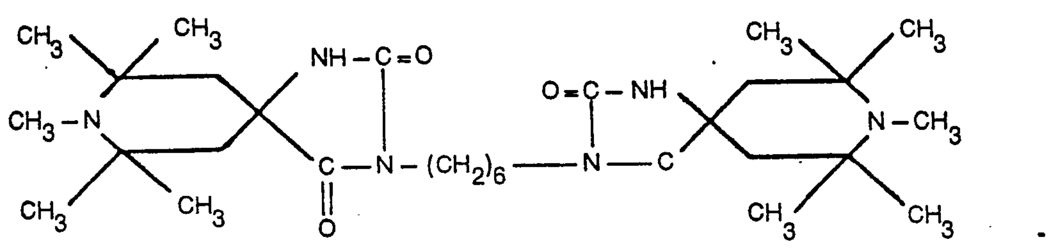

41

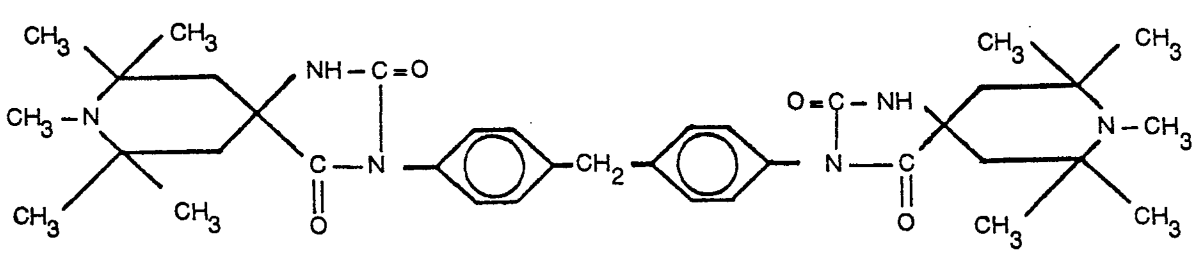

e) Lichtschutzmittel der Formel (VI)

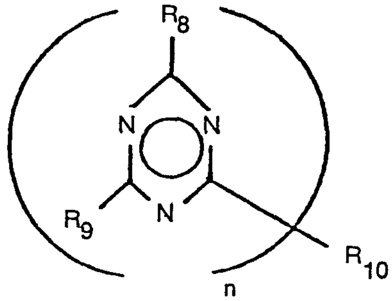

(VI),

worin n die Zahlen 1 oder 2 ist und $R_8$ eine Gruppe der Formel

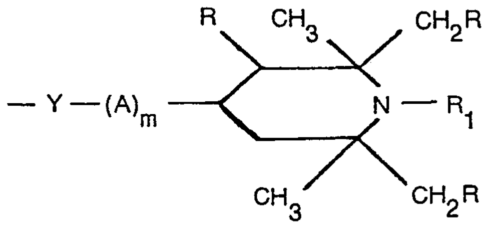

bedeutet, worin R die für Formel (I) angegebene Bedeutung hat, $R_1$ die unter a) angegebene Bedeutung hat, Y —O— oder —$NR_{11}$— ist, A $C_2$—$C_6$ Alkylen und m die Zahlen 0 oder 1 bedeuten, $R_9$ die Gruppen $R_8$, $NR_{11}R_{12}$, —$OR_{13}$, —$NHCH_2OR_{13}$ oder —$N(CH_2OR_{13})_2$ ist, $R_{10}$, wenn n = 1 die Gruppen $R_8$ oder $R_9$ und wenn n = 2 die Gruppe —Y—Q—Y—, worin Q gegebenenfalls durch —$N(R_{14})$— unterbrochenes $C_2$—$C_6$ Alkylen bedeutet, $R_{11}$ $C_1$—$C_{12}$ Alkyl, Cyclohexyl, Benzyl oder $C_1$—$C_4$ Hydroxyalkyl oder eine Gruppe der Formel

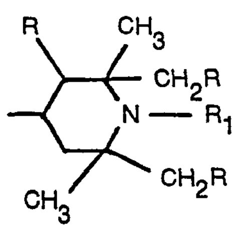

ist, $R_{12}$ $C_1$—$C_{12}$ Alkyl, Cyclohexyl, Benzyl, $C_1$—$C_4$ Hydroxyalkyl, $R_{13}$ Wasserstoff, $C_1$—$C_{12}$ Alkyl oder Phenyl und $R_{14}$ Wasserstoff oder die Gruppe —$CH_2OR_{13}$ bedeuten oder $R_{11}$ und $R_{12}$ zusammen $C_4$—$C_5$ Alkylen oder Oxaalkylen sind oder auch $R_{11}$ und $R_{12}$ jeweils eine Gruppe der Formel

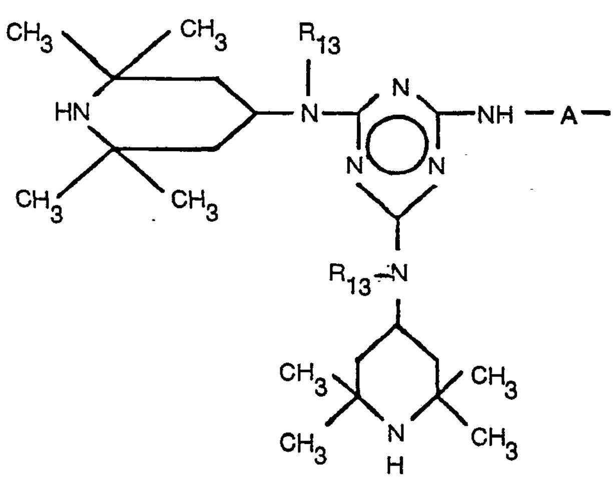

bedeuten.

Bedeuten etwaige Substituenten $C_1$—$C_{12}$ Alkyl, so stellen sie beispielsweise Methyl, Aethyl, n-Propyl, n-Butyl, sek.-Butyl, tert.-Butyl, n-Hexyl, n-Octyl, 2-Aethylhexyl, n-Nonyl, n-Decyl, n-Undecyl oder n-Dodecyl dar.

Bedeuten etwaige Substituenten $C_1$—$C_4$ Hydroxyalkyl, so stellen sie z.B. 2-Hydroxyäthyl, 2-Hydroxypropyl, 3-Hydroxypropyl, 2-Hydroxybutyl oder 4-Hydroxybutyl dar.

Bedeutet A $C_2$—$C_6$ Alkylen, so stellt es beispielsweise Aethylen, Propylen, 2,2-Dimethylpropylen, Tetramethylen oder Hexamethylen dar.

Stellen $R_{11}$ und $R_{12}$ zusammen $C_4$—$C_5$ Alkylen oder Oxaalkylen dar, so bedeutet dies z.B. Tetramethylen, Pentamethylen oder 3-Oxa-pentamethylen.

Beispiele für Polyalkylpiperidin-Lichtschutzmittel dieser Klasse sind die Verbindungen der folgenden Formeln:

42

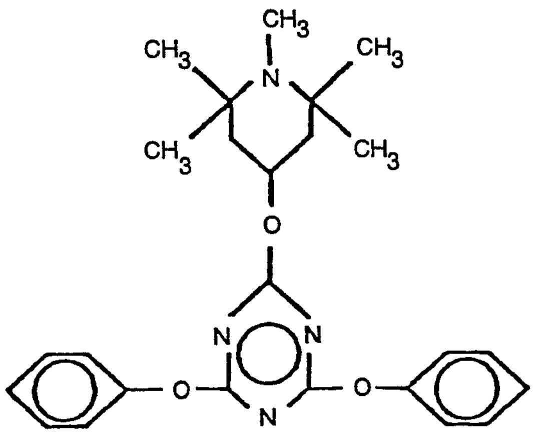

43

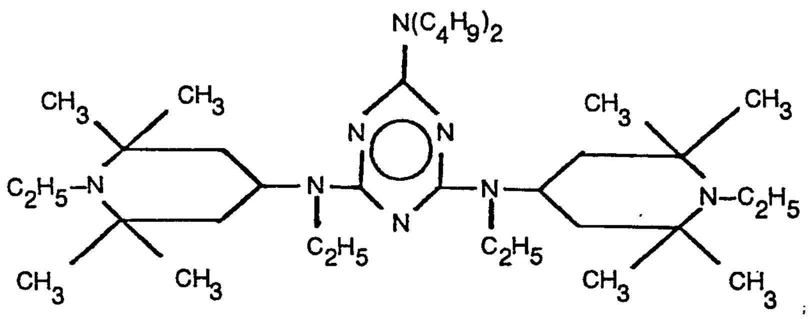

;

44

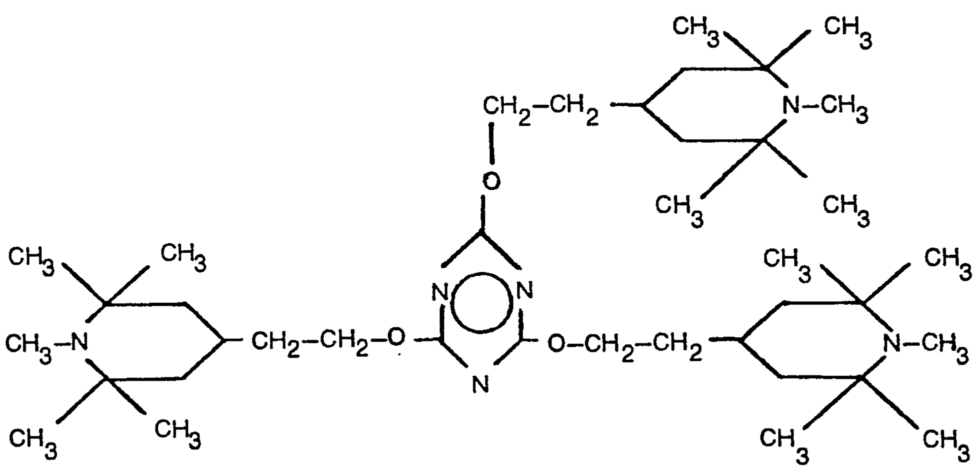

f) Lichtschutzmittel der Formel (VII)

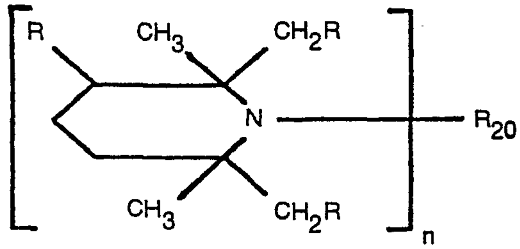

(VII)

worin n die Zahlen 1 oder 2 bedeutet, R Wasserstoff oder Methyl ist und $R_{20}$, wenn n = 1, $C_4$—$C_{18}$ Alkyl, $C_7$—$C_{12}$ Aralkyl, die Gruppe —CO—$R_{15}$, $C_1$—$C_4$ Alkyl substituiert durch —CN, —$COOR_{16}$, —OH, —$OCOR_{17}$ oder

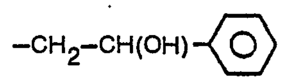

bedeutet, wobei $R_{15}$ $C_1$—$C_{12}$ Alkyl, $C_2$—$C_4$ Alkenyl oder Phenyl, $R_{16}$ $C_1$—$C_{18}$ Alkyl, $R_{17}$ $C_1$—$C_{18}$ Alkyl, $C_2$—$C_{10}$ Alkenyl, Cyclohexyl, Benzyl oder $C_6$—$C_{10}$ Aryl sind oder, wenn n = 2, $R_{14}$ $C_4$—$C_{12}$ Alkylen, 2-Butenylen-1,4, Xylylen, die Gruppen

$$—(CH_2)_2—OOC—R_{18}—COO—(CH_2)_2—,\ —CH_2—OOC—R_{19}—COO—CH_2—,$$

oder

$$—CH_2—CH(OH)—CH_2—O—R_{18}—O—CH_2—CH(OH)—CH_2—$$

ist, wobei $R_{18}$ $C_2$—$C_{10}$ Alkylen, Phenylen, Cyclohexylen oder 2,2-Diphenylen-propan und $R_{19}$ $C_2$—$C_{10}$ Alkylen, Xylylen oder Cyclohexylen bedeuten.

Bedeuten etwaige Substituenten $C_1$—$C_{12}$ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl oder n-Dodecyl dar.

Etwaige Substituenten, die $C_1$—$C_{18}$ Alkyl bedeuten, können z.B. die oben angeführten Gruppen und dazu noch beispielsweise n-Tridecyl, n-Tetradecyl, n-Hexadecyl oder n-Octadecyl darstellen.

Stellen etwaige Gruppen $C_2$—$C_{10}$ Alkylen dar, so bedeuten sie beispielsweise Aethylen, Propylen, 2,2-Dimethyl-propylen, Tetramethylen, Hexamethylen, Octamethylen oder Decamethylen.

$R_{14}$ bedeutet als $C_4$—$C_{18}$ Alkyl z.B. n-Butyl, sek.-Butyl, tert.-Butyl, n-Hexyl, n-Octyl, 2-Aethyl-hexyl, 1,1,-Dimethyl-2-tert.-butyläthyl, n-Nonyl, n-Decyl, n-Dodecyl, n-Tridecyl, n-Tetradecyl, n-Hexadecyl oder n-Octadecyl.

Bedeutet $R_{14}$ ein durch —CN substituiertes $C_1$—$C_4$ Alkyl, so stellt es beispielsweise Cyanomethyl, Cyanoäthyl, 3-Cyano-n-propyl, 4-Cyano-n-butyl dar.

Bedeutet $R_{14}$ $C_4$—$C_{12}$ Alkylen, so handelt es sich z.B. um 2,2-Dimethylpropylen, Tetramethylen, Hexamethylen, Octamethylen, Decamethylen oder Dodecamethylen.

Stellt $R_{14}$ $C_7$—$C_{12}$ Aralkyl dar, so bedeutet es insbesondere Phenäthyl, p-Methyl-benzyl oder vor allem Benzyl.

$R_{15}$ bedeutet als $C_2$—$C_4$ Alkenyl beispielsweise Vinyl, 1-Propenyl, Allyl, Methallyl, 2-Butenyl.

$R_{17}$ bedeutet als $C_2$—$C_{10}$ Alkenyl z.B. die für $R_{15}$ in der Bedeutung Alkenyl angeführten Gruppen und dazu noch beispielsweise Crotyl, 2-Hexenyl, 2-Octenyl oder 2-Decenyl.

Stellt $R_{17}$ $C_6$—$C_{10}$ Aryl dar, so bedeutet es beispielsweise gegebenenfalls in o- oder p-Stellung mit Methyl, Aethyl, Isopropyl, n-Butyl oder tert.-Butyl substituiertes Phenyl.

Beispiele für Polyalkylpiperidin-Lichtschutzmittel dieser Klasse sind folgende Verbindungen:

45 Bis-[2-(2,2,6,6-tetramethylpiperidino)-äthyl]-sebacat

46 1-Octoxycarbonyl-methyl-2,2,6,6-tetramethylpiperidin

47 1,4-Bis-(2,2,6,6-tetramethylpiperidino)-2-buten.

g) Lichtschutzmittel der Formel (VIII)

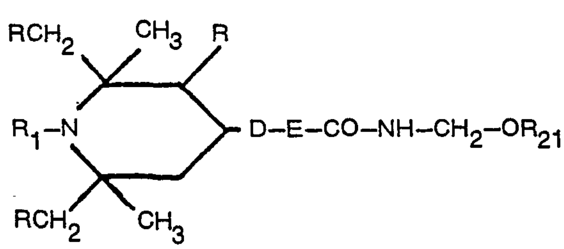

(VIII)

worin D $-N(R_{22})-$ oder $-O-$ ist, E $C_1-C_3$ Alkylen, die Gruppe $-CH_2-CH(R_{23})-O-$, worin $R_{23}$ Wasserstoff, Methyl oder Phenyl ist, die Gruppe $-(CH_2)_3-NH-$ oder eine Einfachbindung bedeutet, R Wasserstoff oder Methyl, $R_1$ $C_1-C_{18}$ Alkyl, $C_3-C_8$ Alkenyl, $C_3-C_8$ Alkinyl, $C_7-C_{12}$ Aralkyl, $C_1-C_8$ Alkanoyl, $C_3-C_5$ Alkenoyl, $R_{21}$ Wasserstoff oder $C_1-C_{18}$ Alkyl bedeuten, $R_{22}$ Wasserstoff, $C_1-C_{18}$ Alkyl, $C_5-C_7$ Cycloalkyl, $C_7-C_{12}$ Aralkyl, Cyanäthyl, $C_6-C_{10}$ Aryl, die Gruppe $-CH_2-CH(R_{23})-OH$, worin $R_{23}$ die oben angegebene Bedeutung hat, eine Gruppe der Formel

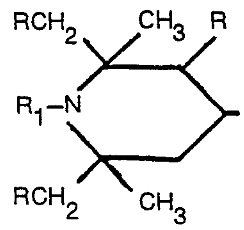

oder eine Gruppe der Formel

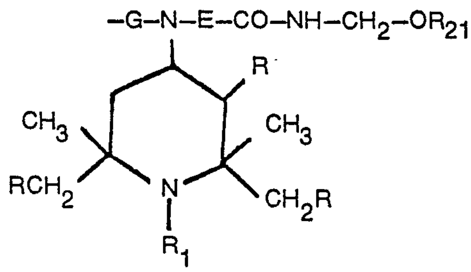

bedeutet, worin G $C_2-C_6$ Alkylen oder $C_6-C_{12}$ Arylen sein kann, oder $R_{22}$ eine Gruppe $-E-CO-NH-CH_2-OR_2$ ist.

Bedeuten etwaige Substituenten $C_1-C_{18}$ Alkyl, so stellen sie z.B. Methyl, Aethyl, n-Propyl, n-Butyl, sek.-Butyl, tert.-Butyl, n-Hexyl, n-Octyl, 2-Aethyl-hexyl, n-Nonyl, n-Decyl, n-Undecyl, n-Dodecyl, n-Tridecyl, n-Tetradecyl, n-Hexadecyl oder n-Octadecyl dar.

Stellen etwaige Substituenten $C_7-C_{12}$ Aralkyl dar, so bedeuten sie beispielsweise Phenäthyl oder insbesondere Benzyl.

Wenn $R_1$ $C_3-C_8$ Alkenyl bedeutet, so kann es sich z.B. um 1-Propenyl, Allyl, Methallyl, 2-Butenyl, 2-Pentenyl, 2-Hexenyl, 2-Octenyl oder 4-tert.-Butyl-2-butenyl handeln.

$R_1$ ist als $C_3-C_8$ Alkinyl bevorzugt Propargyl. Als $C_1-C_8$ Alkanoyl bedeutet $R_1$ beispielsweise Formyl, Propionyl, Butyryl, Octanoyl aber bevorzugt Acetyl und als $C_3-C_5$ Alkenoyl, insbesondere Acryloyl.

$R_3$ bedeutet als $C_5-C_7$ Cycloalkyl, insbesondere Cyclohexyl.

Als $C_6-C_{10}$ Aryl bedeutet $R_3$ insbesondere Phenyl $\alpha$- oder $\beta$-Naphthyl, die gegebenenfalls mit Halogen oder $C_1-C_4$ Alkyl substituiert sind. E bedeutet als $C_1-C_3$ Alkylen z.B. Methylen, Aethylen oder Propylen.

G stellt als $C_2-C_6$ Alkylen beispielsweise Aethylen, Propylen, 2,2-Dimethylpropylen, Tetramethylen oder Hexamethylen und als $C_6-C_{12}$ Arylen o-, m- oder p-Phenylen, 1,4-Naphthylen oder 4,4'-Diphenylen dar.

h) Polymere Verbindungen, deren wiederkehrende Struktureinheiten eine Gruppe der Formel (I) enthalten oder über eine bivalente Gruppe entsprechend der Formel (I), worin $R_1$ eine freie Valenz bedeutet, verbunden sind, wobei im übrigen R und $R_1$ die oben angegebene Bedeutung haben, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für Polyalkylpiperidin-Lichtschutzmittel dieser Klasse sind die Verbindungen der folgenden Formeln, wobei o die Zahlen 2 bis etwa 200 bedeutet.

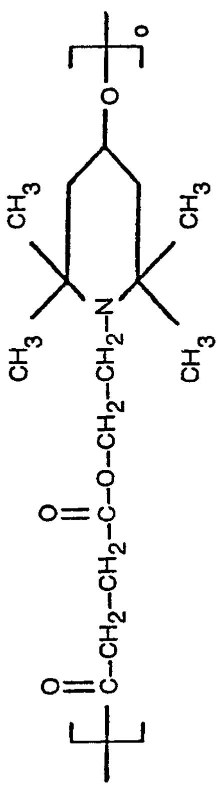

52

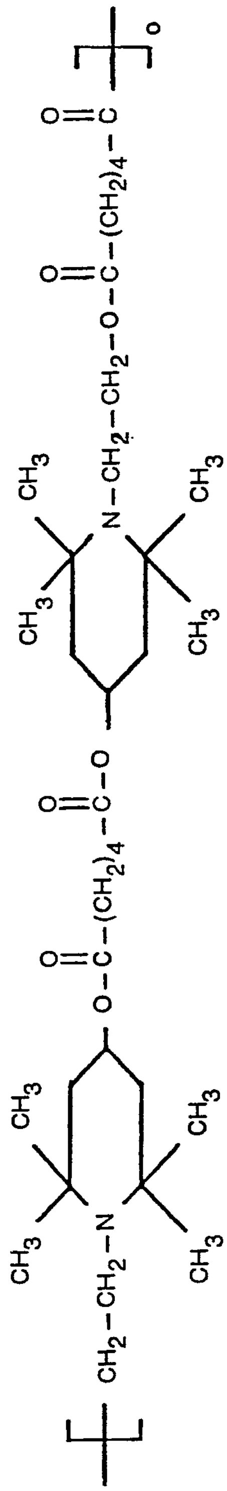

53

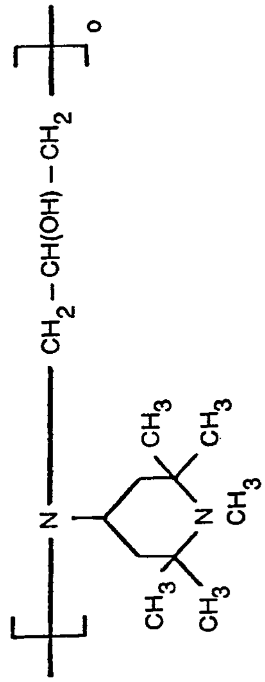

54

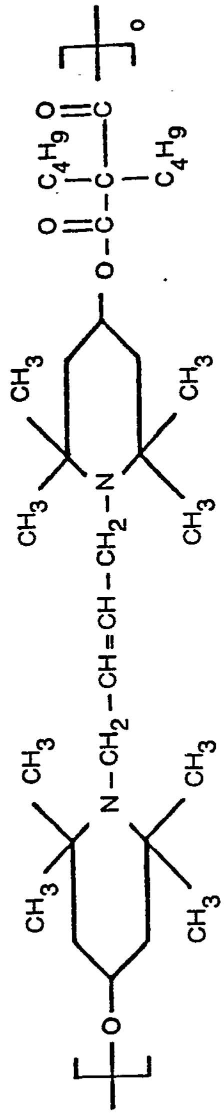

55

56

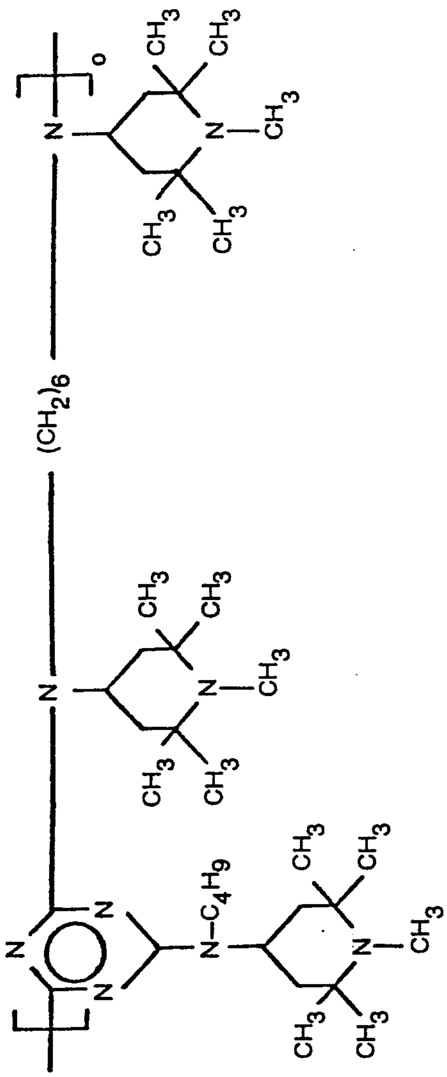

57

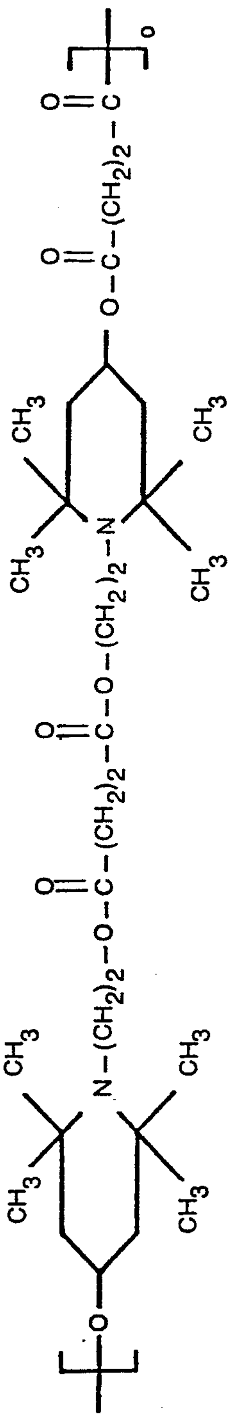

58

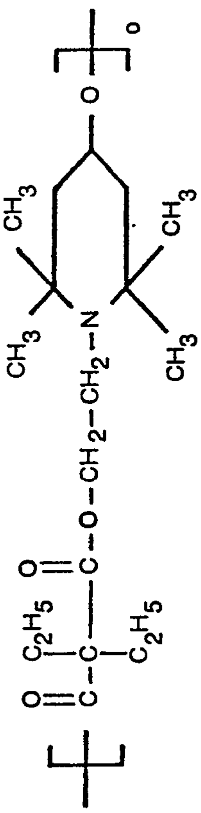

59

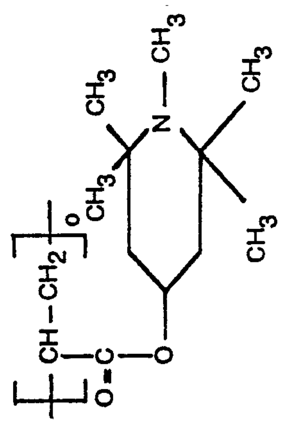

60

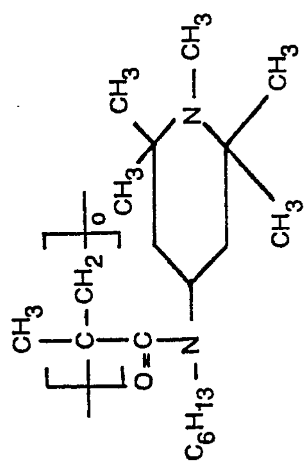

i) Verbindungen, die in ihrem Molekül mindestens eine 2-(2'-Hydroxyphenyl)-benztriazol-Gruppe oder 2-Hydroxybenzophenon-Gruppe und mindestens eine Polyalkylpiperidingruppe enthalten.

Beispiele für Polyalkylpiperidin-Lichtschutzmittel dieser Klasse sind die Verbindungen der folgenden Formeln:

61

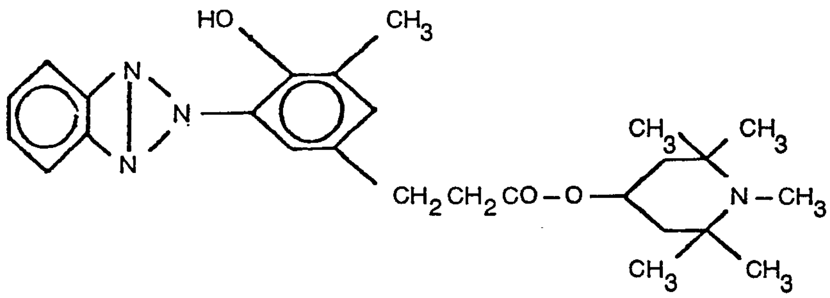

62

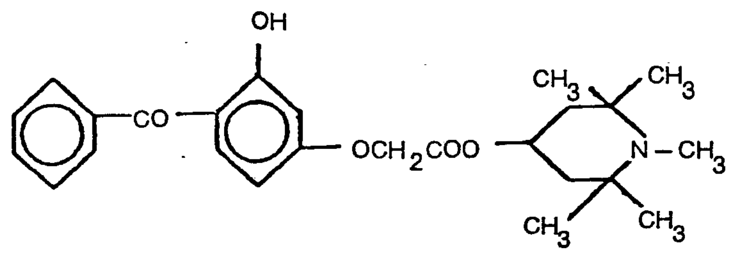

Es können auch Polyalkylpiperidinderivate der Klassen a) bis i) verwendet werden, die mit dem Bindemittel des Lackes chemische Bindungen eingehen. Dies ist der Fall, wenn das Polyalkylpiperidinderivat eine hierfür geeignete reaktive Gruppe besitzt, wie beispielsweise eine Glycidyl- oder eine Methylolgruppe.

Beispiele solcher Verbindungen sind die Methylol- bzw. Methyloläthergruppen enthaltende Polyalkylpiperidinderivate der Klasse g).

Soweit die Polyalkylpiperidinverbindungen basische Verbindungen sind, können sie mit Säuren Salze bilden. Hierfür kommen beispielsweise anorganische Säuren oder organische Carbon-, Sulfon-, Phosphon- oder Phosphinsäuren in Frage, wie z.B. Chlorwasserstoffsäure, Borsäure, Phosphorsäure, Essigsäure, Salicylsäure, Toluolsulfonsäure oder Benzolphosphonsäure.

Die Polyalkylpiperidinverbindungen können mit komplexbildenden Metallverbindungen Komplexe bilden, beispielsweise mit Zink-II-acetate, Cobalt-II-acetylacetonat, Nickel-II-acetylacetonat, Aluminium-III-acetylacetonat, Nickel-II-benzoat oder Aluminium-III-benzoylacetonat.

Die Acrylharzlacke, die erfindungsgemäss gegen Licht, Feuchtigkeit und Sauerstoff stabilisiert werden können, sind die üblichen Acrylharzeinbrennlacke, wie sie beispielsweise in H. Kittel's Lehrbuch der Lacke und Beschichtungen, Band 1, Teil 2, auf den Seiten 735 und 742 (Berlin, 1972) bzw. in H. Wagner, H. F. Sarx, Lackkunstharze (1971), auf den Seiten 229—238 beschrieben sind.

Die Polyesterlacke, die erfindungsgemäss gegen die Einwirkung von Licht und Feuchtigkeit stabilisiert werden können, sind die üblichen Einbrennlacke, wie sie beispielsweise in H. Wagner, H. F. Sarx, Lackkunstharze (1971), auf den Seiten 86—99 beschrieben sind.

Die Alkydharzlacke, die erfindungsgemäss gegen die Einwirkung von Licht und Feuchtigkeit stabilisiert werden können, sind die üblichen Einbrennlacke, die insbesondere zur Lackierung von Automobilen (sogenannte Automobil-Decklacke) verwendet werden, beispielsweise Lacke auf der Basis von Alkyd-Melaminharzen und Alkyd-Acryl-Melaminharzen (siehe H. Wagner, H. F. Sarx, Lackkunstharze (1971), Seiten 99—123).

Die erfindungsgemäss stabilisierten sauerkatalysierten Einbrennlacke eignen sich sowohl für Metalleffekt- wie auch für Uni-Lackierungen, insbesondere im Falle von Ausbesserungslackierungen. Das Auftragen der erfindungsgemäss stabilisierten Lacke geschieht bevorzugt wie üblich nach zwei Verfahren, entweder nach dem Einschicht- oder nach dem Zweischichtverfahren. Im letzteren Falle wird zuerst die Pigment enthaltende Schicht aufgetragen und dann darüber eine deckende Klarlackschicht.

Die Menge des zugesetzten Polyalkylpiperidinderivates beträgt dabei, 0,1 bis 5 Gew.-%, bezogen auf das lösungsmittelfreie Bindemittel, vorzugsweise 0,5 bis 1 Gew.-%. Die Lacke können in üblichen organischen Lösungsmitteln oder in Wasser gelöst oder dispergiert sein oder lösungsmittelfrei sein.

Bei der Verwendung in Zweischichtlackierungen kann das für die erfindungsgemässe Stabilisierung zu verwendende Polyalkylpiperidinderivat entweder nur im unpigmentierten Decklack oder sowohl im unpigmentierten Decklack wie auch im Pigment enthaltenden Vorlegelack eingearbeitet werden. Bei der Herstellung von Acryl-modifizierten Alkydharzen bzw. Acrylharzen können polymerisierbare Polyalkylpiperidinderivate (z.B. die Verbindung 6) in das Harz einpolymerisiert werden. Der Einbau in das Lackbindemittel kann jedoch auch über Polykondensation bei der Herstellung oder eventuell beim Einbrennen der Melamin-, Alkyd- oder Polyesterharze erfolgen. Beispiele für einkondensierbare Polyalkylpiperidinderivate ist die Verbindung 1, sowie das 1-Hydroxyäthyl-4-hydroxy-2,2,6,6-tetramethylpiperidin. Der Einbau über Polyaddition kann z.B. über die Reaktion freier Glycidylgruppen im Polyalkylpiperidinderivat mit Säuregruppen des Acrylharzes erfolgen. Diese Säuregruppen können durch Einpolymerisation von (Meth)acrylatsäure im Acrylharz eingebaut werden.

In diesen Fällen besteht zusätzlich der Vorteil, dass die Lichtschutzmittel nicht durch Extraktion oder Migration entfernbar sind, sodass ihre Wirkung sehr lange anhält.

Für die Erzielung maximaler Lichtbeständigkeit kann die Mitverwendung von anderen üblichen Lichtschutzmitteln von Vorteil sein. Beispiele hierfür sind UV-Absorber vom Typ der Benzophenone, Benztriazole, Acrylsäurederivate, Oxalanilide, oder metallhaltige Lichtschutzmittel, wie z.B. organische Nickelverbindungen.

Im Falle solcher Kombinationen beträgt die Summe aller Lichtschutzmittel 0,2 bis 5 Gew.-%, vorzugsweise 0,5 bis 2 Gew.-%, bezogen auf den Lackharz.

Weitere Zusatzstoffe, die im Lack enthalten sein können, sind Antioxydantien, beispielsweise solche vom Typ sterisch gehinderter Phenolderivate, Phosphorverbindungen, wie Phosphite, Phosphine oder Phosphonite, Weichmacher, Verlaufshilfsmittel, Härtungsbeschleuniger, Verdicker, Dispergiermittel oder Haftverbesserer.

Die folgenden Beispiele beschreiben die erfindungsgemässe Verwendung von N-substituierten Polyalkylpiperidinderivaten in sauerkatalysierten Einbrennlacken auf der Basis von Acrylharz enthaltenden Bindemittelsystemen. Teile bedeuten darin Gewichtsteile, Prozente bedeuten Gewichtsprozente.

Beispiel 1:

Stabilisierungswirkung verschiedener Polyalkylpiperidinderivate in einem mit Maleinsäure katalysierten heissvernetzbaren Acrylharzlack (Zweischicht-Metalleffektlackierung)

*Grundrezeptur der Lacke*

a) Metalleffekt Vorlegelack

27 Teile Polyesterharz L 1850 (Dynamit Nobel AG)
3 Teile Melaminharz Maprenal® RT (Farbwerke Hoechst AG)
2 Teile Celluloseacetobutyrat CAB 531 (Eastman Chem.Corp.)
8 Teile Aluminiumbronze ALCOA 726 (Aluminium Corp.od America)
10 Teile Toluol
7 Teile Xylol
3 Teile Butanol
25 Teile Butylacetat
15 Teile aromatisches Lösungsmittel Solvesso 150 (ESSO AG)

b) Unpigmentierter Decklack

56 Teile Acrylharz Paraloid® OL 42 (Rohm & Haas Corp.)
20 Teile Melaminharz Cymel® 301 (American Cyanamid Corp.)
3,5 Teile Maleinsäure (20%ig in Dioxan)
2 Teile Celluloseacetobutyrat CAB 551 (Eastman Chem.Corp.)
3 Teile Verlaufshilfsmittel
11 Teile Butanol
4,5 Butylacetat

Aluminiumbleche von der Grösse 57 x 79 mm und der Dicke 0,5 mm, die mit einem Grundlack auf Basis von Polyester/Epoxidharz beschichtet waren, wurden erst mit dem Vorlegelack und anschliessend mit dem Decklack beschichtet. Der Vorlegelack wurde zu einer Schichtdicke von ca. 15 $\mu$ aufgespritzt und ca. 10 Minuten abgelüftet. Anschliessend wurde der Klarlack zu einer Schichtdicke von ca. 30 $\mu$ aufgesprüht. Nach einer Abluftzeit von 15 Minuten wurden die Proben 30 Minuten bei 150°C eingebrannt.

Vor dem Auftragen wurde dem Decklack jeweils 1% (bezogen auf das Lackharz) der in Kolonne 1 der nachfolgenden Tabelle 1 angegebenen Polyalkylpiperidinverbindung zugegeben (numeriert nach den in der Beschreibung erwähnten Beispielen). Zum Vergleich wurden auch folgende mit römischen Zahlen gekennzeichneten N-unsubstituierten Polyalkylpiperidinverbindungen zugezogen:

| | |
|---|---|
| Verbindung I: | 4-Hydroxy-2,2,6,6-tetramethylpiperidin (N-unsubstituiertes Homologe der Verbindungen 1, 2, 3 und 4) |
| Verbindung II: | Di-(2,2,6,6-tetramethylpiperidin-4-yl)-sebacat |

Verbindung III:

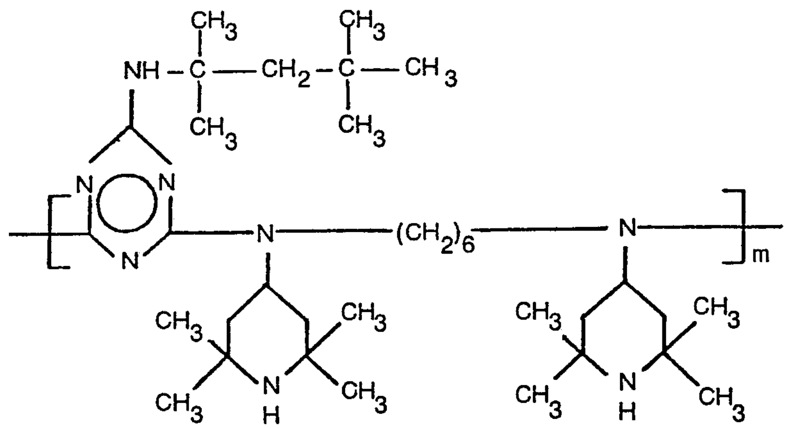

Nach 4 Wochen Lagerung in einem klimatisierten Raum (23°C/50% relative Luftfeuchtigkeit) wurden die lackierten Bleche gemäss Prüfmethode ASTM G—53/77 in einem QUV-Tester 900 Stunden bewittert. Hierbei wurden die Proben jeweils 4 Stunden in feuchter Atmosphäre und UV-Licht bei 50°C und 4 Stunden unter UV-Licht bei 60°C bewittert. Anschliessend wurde.

a) der Gewichtsverlust der Lacke gravimetrisch bestimmt, der in g/m$^2$ in Kolonne 2 der nachfolgenden Tabelle 1 angegeben ist und

b) der Glanz der Lackoberfläche gemäss ASTM D 523 gemessen, wovon die Werte in Kolonne 3 der nachfolgenden Tabelle 1 aufgezeichnet sind.

TABELLE 1

| Lichtschutzmittel | Gewichtsverlust | 20° Glanz (gemittelt) |
|---|---|---|
| ohne Zusatz | 21,8 | 5 |
| Verbindung I | 6,5 | 14 |
| Verbindung II | 16,4 | 4 |
| Verbindung III | 19,9 | 3 |
| Verbindung 1 | 6,5 | 66 |
| Verbindung 2 | 6,9 | 67 |
| Verbindung 3 | 6,8 | 72 |
| Verbindung 4 | 6,8 | 48 |
| Verbindung 20 | 5,7 | 55 |
| Verbindung 58 | 8,9 | 37 |

Beispiel 2:

Ausfällungen in einem sauerkatalysierten heissvernetzbaren Acrylharzlack

In dem in Beispiel 1 beschriebenen Decklack wurden zunächst ohne Katalysatorzusatz jeweils die in Kolonne 1 der nachfolgenden Tabelle 2 angegebenen Lichtschutzmittel (1% bezogen auf das Lackharz) aufgelöst. Anschliessend wurde im gleichen Mengenverhältnis, wie in Beispiel 1 angegeben, Maleinsäure als Katalysator zugegeben, wobei je nach Art des verwendeten Lichtschutzmittels Ausfällerscheinungen beobachtet wurden. Die Ergebnisse sind in der Tabelle 2 zusammengefasst.

TABELLE 2

| Lichtschutzmittel | Aspekt des Lackes | |
|---|---|---|
| | ohne Säurezusatz | mit Säurezusatz |
| ohne Zusatz | klar | klar |
| Verbindung I | klar | Niederschlag |
| Verbindung II | klar | Niederschlag |
| Verbindung III | klar | Niederschlag |
| Verbindung 1 | klar | klar |
| Verbindung 2 | klar | klar |
| Verbindung 3 | klar | klar |
| Verbindung 4 | klar | klar |
| Verbindung 19 | klar | klar |
| Verbindung 20 | klar | klar |
| Verbindung 45 | klar | klar |
| Verbindung 58 | klar | klar |

Beispiel 3:

Härtungsverzögerungen durch Zusatz von Lichtschutzmitteln zu sauerkatalysierten heissvernetzbaren Acrylharzlacken

Der in Beispiel 1 beschriebene Decklack wurde einmal mit 0,34% Maleinsäure (MA) und einmal mit 0,071% p-Toluolsulfonsäure (pTS) als Katalysatoren (%-Mengen jeweils bezogen auf das Lackharz) versetzt und die Lacke nach Zusatz von 1% der in Kolonne 1 der nachfolgenden Tabelle 3 angegebenen Lichtschutzmitteln auf Glasplatten in einer Schichtstärke von ca. 50 $\mu$ nass aufgetragen. Anschliessend wurde 30 Minuten bei 150°C eingebrannt und nach einer Lagerung von einem Tag im klimatisierten Raum (23°C/50% relative Luftfeuchtigkeit) die Pendelhärte nach König gemäss DIN 53 157 gemessen. Die Ergebnisse sind der nachfolgenden Tabelle 3 zu entnehmen.

TABELLE 3

| Lichtschutzmittel | 0,34 % MA | 0,071 % pTS |
|---|---|---|
| ohne Zusatz | 148 | 164 |
| Verbindung II | 76 | klebt |
| Verbindung III | 113 | klebt |
| Verbindung 2 | 142 | 166 |
| Verbindung 3 | 140 | 162 |
| Verbindung 4 | 145 | 158 |
| Verbindung 19 | 138 | 83 |
| Verbindung 20 | 152 | 57 |
| Verbindung 45 | 131 | 142 |
| Verbindung 58 | 145 | 162 |

Beispiel 4:
Einfluss von Polyalkylpiperidinderivaten auf das Spritzverhalten in einem sauerkatalysierten Einbrennlack (Einschicht-Metalleffektlackierung)

*Grundrezeptur des Lacks*

57,6 Teile Acrylharzlack Synthacryl SC 300 (Farbwerke Hoechst) (50%ig in Xylol/Butanol 2:1)
24,5 Teile Malaminharz Maprenal® MF650 (Farbwerke Hoechst) (55%ig in Isobutanol)
1,3 Teile Aluminiumpaste Stapa Mobil R (Eckast-Werke, Fürth/D)
3,4 Teile Maleinsäure (20%ig in Dioxan)
3,9 Teile Butylglycolacetat
2 Teile Aethylglycolacetat
7,3 Teile Xylol

Der Metalleffektlack wurde mit Xylol auf eine Spritzviskosität von ca. 19 sec. (DIN 53211) eingestellt und auf mit einem Coil-coat beschichtete Aluminiumbleche aufgespritzt. Nach kurzer Ablüftzeit wurden die Lacke 30 Minuten bei 80°C eingebrannt und qualitativ bewertet. Die Ergebnisse sind der nachfolgenden Tabelle 4 zu entnehmen (Verbindungen I, II und III: siehe Beispiel 1. Die erfindungsgemässen Lichtschutzmittel sind nach den in der Beschreibung erwähnten Beispielen numeriert).

TABELLE 4

| Lichtschutzmittel * (1% bezogen auf Lackfestkörper) | Aspekt der Lacke nach dem Einbrennen |
|---|---|
| ohne Zusatz | einwandfrei |
| Verbindung I | Kraterbildung, Verlaufsstörungen |
| Verbindung II | matt, Kraterbildung |
| Verbindung III | matt, Kraterbildung |
| Verbindung 1 | einwandfrei |
| Verbindung 2 | einwandfrei |
| Verbindung 3 | einwandfrei |
| Verbindung 19 | einwandfrei |

* in Xylol gelöst und danach dem Lack zugesetzt.

## Patentansprüche

1. Verwendung von N-substituierten 2,2,6,6-Tetraalkylpiperidinverbindungen, ihren Säureadditionssalzen oder Komplexen mit Metallverbindungen, gegebenenfalls zusammen mit weiteren Stabilisatoren zum Stabilisieren von sauerkatalysierten Einbrennlacken auf der Basis heissvernetzbarer Acryl-, Polyester- oder Alkydharze gegen die Einwirkung von Licht, Feuchtigkeit und Sauerstoff.

2. Verwendung gemäss Anspruch 1 von Verbindungen, die eine Gruppe der Formel (I)

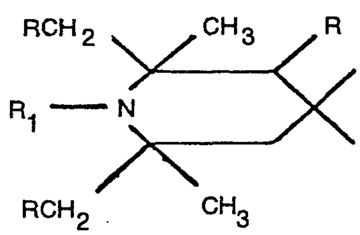

(I)

enthalten oder von Polymeren, deren wiederkehrende Struktureinheiten eine Gruppe der Formel I enthalten oder über eine bivalente Gruppe entsprechend der Formel I, worin $R_1$ eine freie Valenz bedeutet, verbunden sind, wobei im übrigen R Wasserstoff oder Methyl und $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl bedeuten.

3. Verwendung gemäss Anspruch 2 von Lichtschutzmitteln der Formel (II)

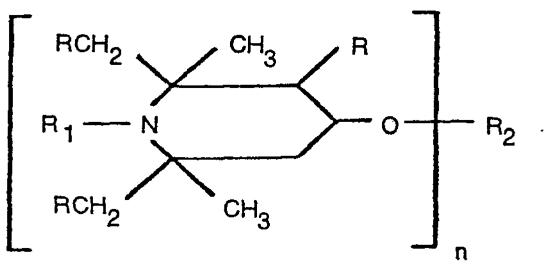

(II),

worin n die Zahlen 1—4 bedeutet, R Wasserstoff oder Methyl ist, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl oder $C_3$—$C_5$ Alkenoyl ist, $R_2$, wenn n = 1, Wasserstoff, $C_1$—$C_{12}$ Alkyl, Cyanäthyl, Benzyl, Glycidyl, einen einwertigen Rest einer gesättigten oder ungesättigten aliphatischen, cycloaliphatischen, araliphatischen oder aromatischen Carbonsäure, Carbaminsäure oder Phosphor enthaltenden Säure oder einen einwertigen Silylrest, wenn n = 2, $C_2$—$C_{12}$ Alkylen, $C_4$—$C_{12}$ Alkenylen, Xylylen, einen zweiwertigen Rest einer gesättigten oder ungesättigten aliphatischen, cycloaliphatischen, araliphatischen oder aromatischen Dicarbonsäure, Dicarbaminsäure oder Phosphor enthaltenden Säure oder einen zweiwertigen Silylrest, wenn n = 3, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest, wenn n = 4, einen vierwertigen Rest einer aliphatischen, cycloaliphatischen oder aromatischen Tetracarbonsäure bedeutet.

4. Verwendung gemäss Anspruch 3 von Lichtschutzmitteln der Formel (II), worin n die Zahlen 1 oder 2 bedeutet, R Wasserstoff oder Methyl ist, $R_1$ $C_1$—$C_{12}$ Alkyl, Allyl, Benzyl, Acetyl, Acryloyl ist und $R_2$, wenn n = 1, einen Rest einer aliphatischen Carbonsäure mit 2—18 C-Atomen, einer cycloaliphatischen Carbonsäure mit 5—12 C-Atomen oder einer aromatischen Carbonsäure mit 7—15 C-Atomen, wenn n = 2 einen Rest einer aliphatischen Dicarbonsäure mit 2—12 C-Atomen, einer cycloaliphatischen oder aromatischen Dicarbonsäure mit 8—14 C-Atomen, einer aliphatischen, cycloaliphatischen oder aromatischen Dicarbaminsäure mit 8—14 C-Atomen bedeutet.

5. Verwendung gemäss Anspruch 2 von Lichtschutzmitteln der Formel (III)

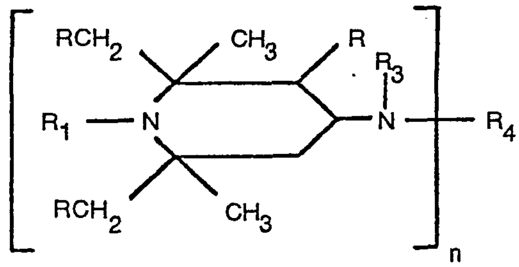

(III)

worin n die Zahlen 1 oder 2 bedeutet, R Wasserstoff oder Methyl ist, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl, $R_3$ $C_1$—$C_{12}$ Alkyl, $C_5$—$C_7$ Cycloalkyl, $C_7$—$C_8$ Aralkyl, $C_2$—$C_{18}$ Alkanoyl, Benzoyl ist und $R_4$, wenn n = 1, $C_1$—$C_{12}$ Alkyl, $C_5$—$C_7$ Cycloalkyl, gegebenenfalls mit einer Cyano-, Carbonyl- oder Carbamidgruppe substituiertes $C_2$—$C_8$ Alkenyl, Glycidyl, eine Gruppe der Formel $—CH_2—CH(OH)—Z$ oder der Formel $—CONH—Z$ ist, worin Z Wasserstoff, Methyl oder Phenyl bedeutet, und, wenn n = 2, $C_2$—$C_{12}$ Alkylen, $C_6$—$C_{12}$ Arylen, Xylylen, eine $—CH_2—CH(OH)—CH_2—$ Gruppe oder eine Gruppe

$$—CH_2—CH(OH)—CH_2—O—X—O—CH_2—CH(OH)—CH_2$$

bedeutet, worin X $C_2$—$C_{10}$ Alkylen, $C_6$—$C_{15}$ Arylen, $C_6$—$C_{12}$ Cycloalkylen ist, oder, vorausgesetzt, dass $R_3$ nicht Alkanoyl, Alkenoyl oder Benzoyl bedeutet, $R_4$ auch einen zweiwertigen Rest einer aliphatischen, cycloaliphatischen oder aromatischen Dicarbonsäure oder Dicarbaminsäure bedeuten kann, oder $R_3$ und $R_4$ zusammen, wenn n = 1, der cyclische Rest einer aliphatischen oder aromatischen 1,2-oder 1,3-Dicarbonsäure sein können.

6. Verwendung gemäss Anspruch 2 von Lichtschutzmitteln der Formel (IV)

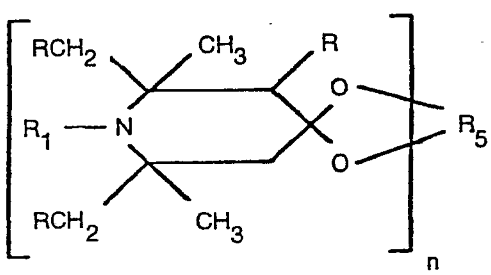

(IV)

worin n die Zahlen 1 oder 2 bedeutet, R Wasserstoff oder Methyl ist, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl, $R_5$, wenn n = 1, $C_2$—$C_8$ Alkylen oder Hydroxyalkylen, $C_4$—$C_{22}$ Acyloxyalkylen, wenn n = 2, die Gruppe $(—CH_2)_2C(CH_2—)_2$ bedeutet.

7. Verwendung gemäss Anspruch 2 von Lichtschutzmitteln der Formel (V)

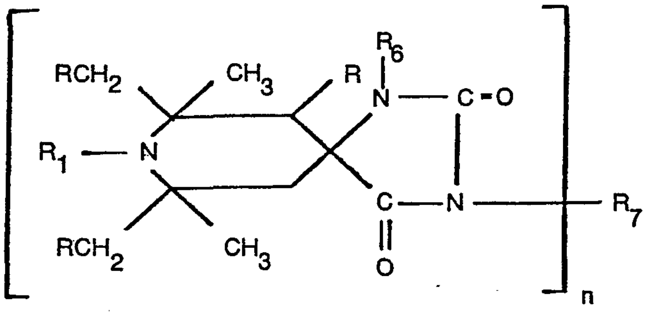

(V)

worin n die Zahlen 1 oder 2 bedeutet, R Wasserstoff oder Methyl ist, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl, $C_3$—$C_5$ Alkenoyl, $R_6$ Wasserstoff, $C_1$—$C_{12}$ Alkyl, Allyl, Benzyl, Glycidyl, $C_2$—$C_6$ Alkoxyalkyl ist und $R_7$, wenn n = 1, Wasserstoff, $C_1$—$C_{12}$ Alkyl, Glycidyl, $C_3$—$C_5$ Alkenyl, $C_7$—$C_9$ Aralkyl, $C_5$—$C_7$ Cycloalkyl, $C_2$—$C_4$ Hydroxyalkyl, $C_2$—$C_6$ Alkoxyalkyl, $C_6$—$C_{10}$ Aryl und, wenn n = 2, $C_2$—$C_{12}$ Alkylen oder $C_6$—$C_{12}$ Arylen oder eine Gruppe $—CH_2CH(OZ')CH_2—(OCH_2—CH(OZ')CH_2)_2—$ bedeutet, worin Z' Wasserstoff, $C_1$—$C_{18}$ Alkyl, Allyl, Benzyl, $C_2$—$C_{12}$ Alkanoyl oder Benzoyl ist.

8. Verwendung gemäss Anspruch 2 von Lichtschutzmitteln der Formel (VI)

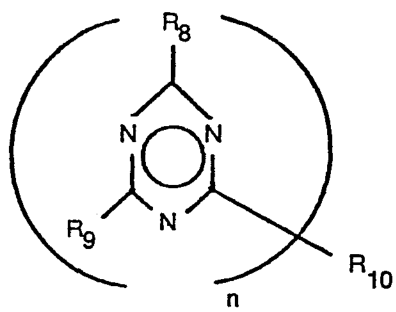

(VI),

worin n die Zahlen 1 oder 2 ist und $R_8$ eine Gruppe der Formel

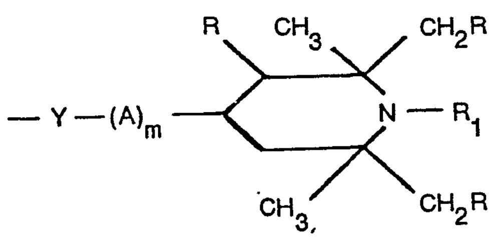

bedeutet, worin R Wasserstoff oder Methyl bedeutet, $R_1$ $C_1$—$C_{18}$ Alkyl, $C_1$—$C_6$ Hydroxyalkyl, $C_3$—$C_8$ Alkenyl, $C_3$—$C_8$ Alkinyl, gegebenenfalls im Alkylteil durch Hydroxy substituiertes $C_7$—$C_{12}$ Aralkyl, $C_1$—$C_8$ Alkanoyl oder $C_3$—$C_5$ Alkenoyl bedeutet, Y —O— oder $—NR_{11}—$ ist, A $C_2$—$C_6$ Alkylen und m die Zahlen 0 oder 1 bedeuten, $R_9$ die Gruppen $R_8$, $NR_{11}R_{12}$, $—OR_{13}$, $—NHCH_2OR_{13}$ oder $—N(CH_2OR_{13})_2$ ist, $R_{10}$, wenn n = 1, die Gruppen $R_8$ oder $R_9$ und, wenn n = 2, die Gruppe —Y—Q—Y—, worin Q gegebenenfalls durch $—N(R_{14})—$ unterbrochenes $C_2$—$C_6$ Alkylen bedeutet, $R_{11}$ $C_1$—$C_{12}$ Alkyl, Cyclohexyl, Benzyl oder $C_1$—$C_4$ Hydroxyalkyl oder eine Gruppe der Formel

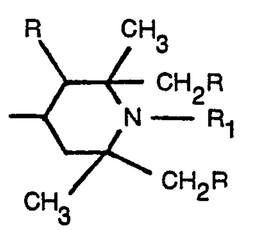

ist, $R_{12}$ $C_1$—$C_{12}$ Alkyl, Cyclohexyl, Benzyl, $C_1$—$C_4$ Hydroxyalkyl, $R_{13}$ Wasserstoff, $C_1$—$C_{12}$ Alkyl oder Phenyl und $R_{14}$ Wasserstoff oder die Gruppe $—CH_2OR_{13}$ bedeuten oder $R_{11}$ und $R_{12}$ zusammen $C_4$—$C_5$

Alkylen oder Oxaalkylen sind oder auch $R_{11}$ und $R_{12}$ jeweils eine Gruppe der Formel

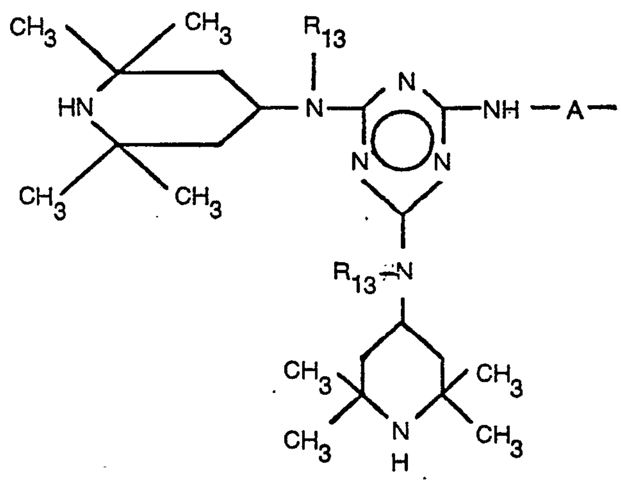

bedeuten.

9. Verwendung gemäss Anspruch 1 von Lichtschutzmitteln der Formel (VII)

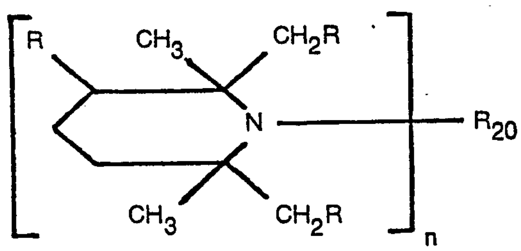

(VII)

worin n die Zahlen 1 oder 2 bedeutet, R Wasserstoff oder Methyl ist und $R_{20}$ wenn n = 1, $C_4$—$C_{18}$ Alkyl, $C_7$—$C_{12}$ Aralkyl, die Gruppe —CO—$R_{15}$, $C_1$—$C_4$ Alkyl substituiert durch —CN, —$COOR_{16}$, —OH, —$OCOR_{17}$ oder

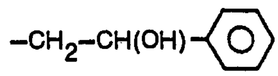

bedeutet, wobei $R_{15}$ $C_1$—$C_{12}$ Alkyl, $C_2$—$C_4$ Alkenyl oder Phenyl, $R_{16}$ $C_1$—$C_{18}$ Alkyl, $R_{17}$ $C_1$—$C_{18}$ Alkyl, $C_2$—$C_{10}$ Alkenyl, Cyclohexyl, Benzyl oder $C_6$—$C_{10}$ Aryl sind, oder, wenn n = 2, $R_{14}$ $C_4$—$C_{12}$ Alkylen, 2-Butenylen-1,4,Xylylen, die Gruppen

$$—(CH_2)_2—OOC—R_{18}—COO—(CH_2)_2—,$$

$$—CH_2—OOC—R_{19}—COO—CH_2—$$

oder

$$—CH_2—CH(OH)—CH_2—O—R_{18}—O—CH_2—CH(OH)—CH_2$$

ist, wobei $R_{18}$ $C_2$—$C_{10}$ Alkylen, Phenylen, Cyclohexylen oder 2,2,-Diphenylen-propan und $R_{19}$ $C_2$—$C_{10}$ Alkylen, Xylylen oder Cyclohexylen bedeuten.

10. Verwendung gemäss Anspruch 2 von Lichtschutzmitteln der Formel VIII

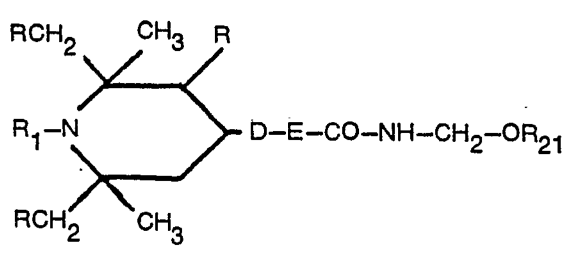

(VIII)

worin D $-N(R_{22})-$ oder $-O-$ ist, E $C_1-C_3$ Alkylen, die Gruppe $-CH_2-CH(R_{23})-O-$, worin $R_{23}$ Wasserstoff, Methyl oder Phenyl ist, die Gruppe $-(CH_2)_3-NH-$ oder eine Einfachbindung bedeutet, R Wasserstoff oder Methyl, $R_1$ $C_1-C_{18}$ Alkyl, $C_3-C_8$ Alkenyl, $C_3-C_8$ Alkinyl, $C_7-C_{12}$ Aralkyl, $C_1-C_8$ Alkanoyl, $C_3-C_5$ Alkenoyl, $R_{21}$ Wasserstoff oder $C_1-C_{18}$ Alkyl bedeuten, $R_{22}$ Wasserstoff, $C_1-C_{18}$ Alkyl, $C_5-C_7$ Cycloalkyl, $C_7-C_{12}$ Aralkyl, Cyanäthyl, $C_6-C_{10}$ Aryl, die Gruppe $-CH_2-CH(R_{23})-OH$, worin $R_{23}$ die oben angegebene Bedeutung hat, eine Gruppe der Formel

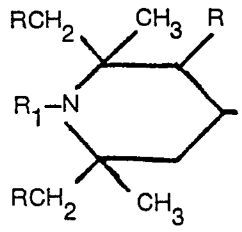

oder eine Gruppe der Formel

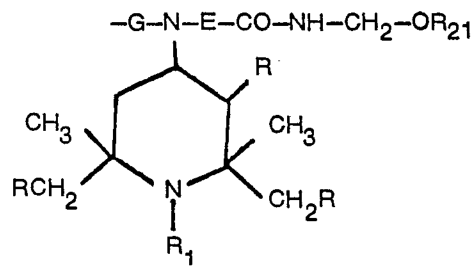

bedeutet, worin G $C_2-C_6$ Alkylen oder $C_6-C_{12}$ Arylen sein kann, oder $R_{22}$ eine Gruppe $-E-CO-NH-CH_2-OR_2$ ist.

11. Verwendung gemäss Anspruch 2, dadurch gekennzeichnet, dass man als Lichtschutzmittel polymere Verbindungen verwendet, deren wiederkehrende Strukureinheiten eine Gruppe der Formel (I) enthalten oder über eine bivalente Gruppe entsprechend der Formel (I), worin $R_1$ eine freie Valenz bedeutet, verbunden sind, wobei im übrigen R und $R_1$ die in Anspruch 2 angegebene Bedeutung haben, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

12. Verwendung gemäss Anspruch 2, dadurch gekennzeichnet, dass man als Lichtschutzmittel Verbindungen, die in ihrem Molekül mindestens eine 2-(2'-Hydroxyphenyl)-benztriazolgruppe oder 2-Hydroxybenzophenongruppe und mindestens eine Polyalkylpiperidingruppe enthalten, verwendet.

13. Verwendung nach einem der vorhergehenden Ansprüche, dadurch gekennzeichnet, dass man ein Säureadditionssalz einer N-substituierten 2,2,6,6-Tetraalkylpiperidinverbindung verwendet.

14. Verwendung nach einem der Ansprüche 1—12, dadurch gekennzeichnet, dass man einen Komplex einer N-substituierten 2,2,6,6-Tetraalkylpiperidinverbindung mit einer Metallverbindung verwendet.

15. Verwendung nach einem der vorhergehenden Ansprüche, dadurch gekennzeichnet, dass man die N-substituierte 2,2,6,6-Tetraalkylpiperidinverbindung in eine Menge von 0,1 bis 5 Gew.-%, bezogen auf das lösungsmittelfreie Bindemittel (Lackharz), verwendet.

16. Verwendung nach Anspruch 15, dadurch gekennzeichnet, dass man zusätzlich andere Lichtschutzmittel verwendet, deren Menge so gewählt wird, dass die Summe aller Lichtschutzmittel 0,2 bis 5 Gew.-%, bezogen auf das lösungsmittelfreie Bindemittel (Lackharz), beträgt.

17. Verwendung nach einem der Ansprüche 15 oder 16, dadurch gekennzeichnet, dass als weitere Additive Antioxydantien, Weichmacher, Verlaufsmittel, Härtungsbeschleuniger, Verdicker, Dispergiermittel oder Haftverbesserer zugegeben werden.

18. Verwendung nach einem der vorhergehenden Ansprüche für Metalleffektlackierungen.

19. Verwendung nach einem der Ansprüche 1—17 für Unilackierungen.

20. Verwendung nach einem der vorhergehenden Ansprüche für Einschicht-Lackierungen.

21. Verwendung nach einem der Ansprüche 1—19 für Zweischicht-Lackierungen.

22. Verwendung nach einem der vorhergehenden Ansprüche zur Ausbesserungs-Lackierung von Automobilen.

23. Verwendung nach einem der vorhergehenden Ansprüche in festkörperreichen Lacken für den Industrielacksektor.

24. Verwendung gemäss Anspruch 1, dadurch gekennzeichnet, dass sauerkatalysierte Einbrennlacke auf der Basis heissvernetzbarer Acryloder Alkydharze stabilisiert werden.

**Claims**

1. Use of N-substituted 2,2,6,6-tetraalkylpiperidine compounds, their acid addition salts or complexes with metal compounds, optionally together with further stabilisers for stabilising acid catalysed stoving lacquers based on hot crosslinkable acrylic, polyester or alkyd resins, against the action of light, moisture and oxygen.

2. Use according to claim 1 of compounds which contain a group of the formula (I)

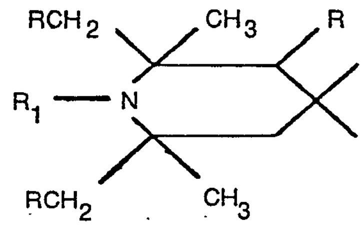

(I)

or of polymers, the recurring structural units of which contain a group of the formula I or are linked through a bivalent group corresponding to the formula I, wherein $R_1$ represents a free valency, and otherwise R represents hydrogen or methyl and $R_1$ represents $C_1$—$C_{18}$alkyl, $C_1$—$C_6$hydroxyalkyl, $C_3$—$C_8$alkenyl, $C_3$—$C_8$alkynyl, $C_7$—$C_{12}$aralkyl which is unsubstituted or substituted in the alkyl moiety by hydroxyl, or $C_1$—$C_8$alkanoyl or $C_3$—$C_5$alkenoyl.

3. Use according to claim 2 of light stabilisers of the formula (II)

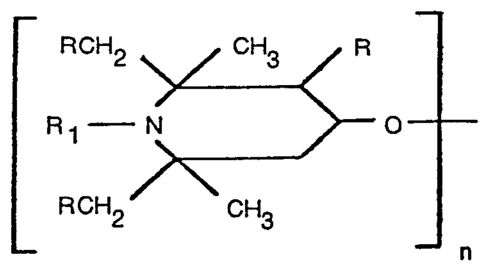

(II),

wherein n is 1 to 4, R is hydrogen or methyl, $R_1$ represents $C_1$—$C_{18}$alkyl, $C_1$—$C_6$hydroxyalkyl, $C_3$—$C_8$alkenyl, $C_3$—$C_8$alkynyl, $C_7$—$C_{12}$aralkyl which is unsubstituted or substituted in the alkyl moiety by hydroxyl, or represents $C_1$—$C_8$alkanoyl or $C_3$—$C_5$alkenoyl, $R_2$ if n is 1, represents hydrogen, $C_1$—$C_{12}$alkyl, cyanoethyl, benzyl, a monovalent radical of a saturated or unsaturated aliphatic, cycloaliphatic, araliphatic, or aromatic carboxylic acid, carbamic acid or phosphorus-containing acid or a monovalent silyl radical, and if n is 2, represents $C_1$—$C_{12}$alkylene, $C_4$—$C_{12}$alkenylene, xylylene, a divalent radical of a saturated or unsaturated aliphatic, cycloaliphatic, araliphatic or aromatic dicarboxylic acid, dicarbamic acid or phosphorus-containing acid or a divalent silyl radical, and, if n is 3, represents a trivalent radical of an aliphatic, cycloaliphatic or aromatic tricarboxylic acid, of an aromatic tricarbamic acid or of a phosphorus-containing acid or a trivalent silyl radical, and, if n is 4, represents a quadrivalent radical of an aliphatic, cycloaliphatic or aromatic tetracarboxylic acid.

4. Use according to claim 3 of light stabilisers of the formula (II), wherein n is 1 or 2, R is hydrogen or methyl, $R_1$ is $C_1$—$C_{12}$alkyl, allyl, benzyl, acetyl, acryloyl, and $R_2$ if n is 1, represents a radical of an aliphatic carboxylic acid of 2 to 18 carbon atoms, of a cycloaliphatic carboxylic acid of 5 to 12 carbon atoms or of an aromatic carboxylic acid of 7 to 15 carbon atoms, and if n is 2, represents a radical of an aliphatic dicarboxylic acid of 2 to 12 carbon atoms, of a cycloaliphatic or aromatic dicarboxylic acid of 8 to 14 carbon atoms, of an aliphatic, cycloaliphatic or aromatic dicarbamic acid of 8 to 14 carbon atoms.

5. Use according to claim 2 of light stabilisers of the formula (III)

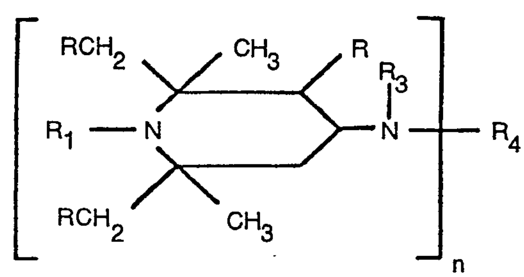

(III)

wherein n is 1 or 2, R is hydrogen or methyl, $R_1$ represents $C_1$—$C_{18}$alkyl, $C_1$—$C_6$hydroxyalkyl,

$C_3$—$C_8$alkenyl, $C_3$—$C_8$alkynyl $C_7$—$C_{12}$aralkyl which is unsubstituted or substituted in the alkyl moiety by hydroxyl, or represents $C_1$—$C_8$alkanoyl, $C_3$—$C_5$alkenoyl, $R_3$ represents $C_1$—$C_{12}$alkyl, $C_5$—$C_7$cycloalkyl, $C_7$—$C_8$aralkyl, $C_2$—$C_{18}$alkanoyl, or benzoyl, and $R_4$ if n is 1, represents $C_1$—$C_{12}$alkyl, $C_5$—$C_7$cycloalkyl, $C_2$—$C_8$alkyl which is unsubstituted or substituted by a cyano, carbonyl or carbamide group, glycidyl, a group of the formula —$CH_2CH(OH)$—Z or of the formula —CONH—Z, wherein Z is hydrogen, methyl or phenyl, and, if n is 2, represents $C_2$—$C_{12}$alkylene, $C_6$—$C_{12}$arylene, xylylene, a —$CH_2$—CH(OH)—$CH_2$ group or a

$$—CH_2—CH(OH)—CH_2—O—X—O—CH_2—CH(OH)—CH_2—$$

group, wherein X represents $C_2$—$C_{10}$alkylene, $C_6$—$C_{15}$arylene, $C_6$—$C_{12}$—cycloalkylene, or, with the proviso that $R_3$ does not represent alkanoyl, alkenoyl or benzoyl, $R_4$ can also represent a divalent radical or an aliphatic, cycloaliphatic or aromatic dicarboxylic acid or dicarbamic acid, or $R_3$ and $R_4$ together, if n is 1, can be the cyclic radical of an aliphatic or aromatic 1,2- or 1,3-dicarboxylic acid.

6. Use according to claim 2 of light stabilisers of the formula (IV)

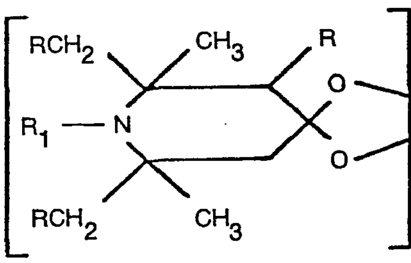

(IV)

wherein n is 1 or 2, R is hydrogen or methyl, $R_1$ represents $C_1$—$C_{18}$alkyl, $C_1$—$C_6$hydroxyalkyl, $C_3$—$C_8$alkenyl, $C_3$—$C_8$alkynyl, $C_7$—$C_{12}$aralkyl which is unsubstituted or substituted in the alkyl moiety by hydroxyl, or represents $C_1$—$C_8$alkanoyl, $C_3$—$C_5$alkenoyl, glycidyl, a —$CH_2CH(OH)$—Z group, wherein Z is hydrogen, methyl or phenyl, $R_5$ if n is 1, represents $C_2$—$C_8$alkylene or hydroxyalkylene or $C_4$—$C_{22}$acyloxyalkylene, and if n is 2, represents the group $(—CH_2)_2C(CH_2—)_2$.

7. Use according to claim 2 of light stabilisers of the formula (V)

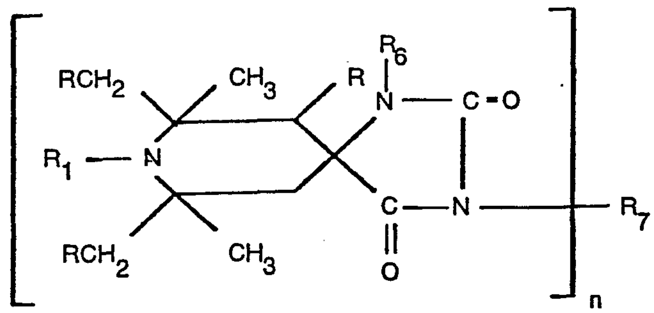

(V)

wherein n is 1 or 2, R is hydrogen or methyl, $R_1$ represents $C_1$—$C_{18}$alkyl, $C_1$—$C_6$hydroxyalkyl, $C_3$—$C_8$alkenyl, $C_3$—$C_8$alkynyl, $C_7$—$C_{12}$aralkyl which is unsubstituted or substituted in the alkyl moiety by hydroxyl, or represents $C_1$—$C_8$alkanoyl, $C_3$—$C_5$alkenoyl, $R_6$ represents hydrogen, $C_1$—$C_{12}$alkyl, allyl, benzyl, glycidyl or $C_2$—$C_6$alkoxyalkyl, and $R_7$, if n is 1, represents hydrogen, $C_1$—$C_{12}$alkyl, glycidyl, $C_3$—$C_5$alkenyl, $C_7$—$C_9$aralkyl, $C_5$—$C_7$cycloalkyl, $C_2$—$C_4$hydroxyalkyl, $C_2$—$C_6$—alkoxyalkyl, $C_6$—$C_{10}$aryl, and, if n is 2, represents $C_2$—$C_{12}$alkylene, $C_6$—$C_{12}$arylene or a group

$$—CH_2CH(OZ')CH_2—(OCH_2—CH(OZ')CH_2)_2—,$$

wherein Z' represents hydrogen, $C_1$—$C_{18}$alkyl, allyl, benzyl, $C_2$—$C_{12}$alkanoyl or benzoyl.

8. Use according to claim 2 of light stabilisers of the formula (VI)

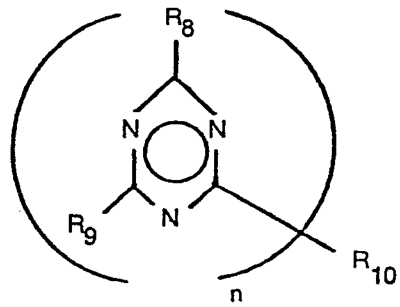

(VI),

wherein n is 1 or 2 and $R_8$ represents a group of the formula

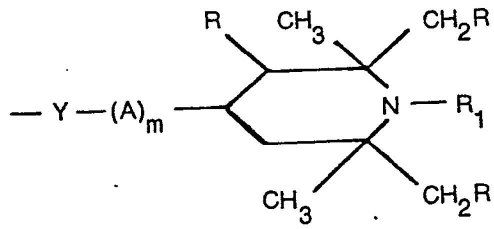

wherein R is hydrogen or methyl, $R_1$ represents $C_1$—$C_{18}$alkyl, $C_1$—$C_6$hydroxyalkyl, $C_3$—$C_8$alkenyl, $C_3$—$C_8$alkynyl, $C_7$—$C_{12}$aralkyl which is unsubstituted or substituted in the alkyl moiety by hydroxyl, or represents $C_1$—$C_8$alkanoyl or $C_3$—$C_5$alkenoyl, Y represents —O— or $NR_{11}$, A represents $C_2$—$C_6$alkylene, m is 0 or 1, $R_9$ represents the groups $R_8$, $NR_{11}R_{12}$, —$OR_{13}$, —$NHCH_2OR_{13}$ or —$N(CH_2OR_{13})_2$, $R_{10}$ if n is 1, represents the groups $R_8$ or $R_9$ and, if n is 2, represents the group —Y—Q—Y—, wherein Q represents $C_2$—$C_6$—alkylene which is optionally interrupted by —$N(R_{14})$—, $R_{11}$ represents $C_1$—$C_{12}$alkyl, cyclohexyl, benzyl or $C_1$—$C_4$hydroxyalkyl or a group of the formula

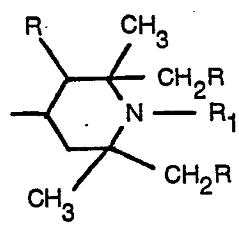

$R_{12}$ represents $C_1$—$C_{12}$alkyl, cyclohexyl, benzyl, $C_1$—$C_4$hydroxyalkyl, $R_{13}$ represents hydrogen, $C_1$—$C_{12}$alkyl or phenyl, and $R_{14}$ represents hydrogen or the group —$CH_2OR_{13}$, or $R_{11}$ and $R_{12}$ together are $C_4$—$C_5$alkylene or oxaalkylene, or each of $R_{11}$ and $R_{12}$ also represents a group of the formula

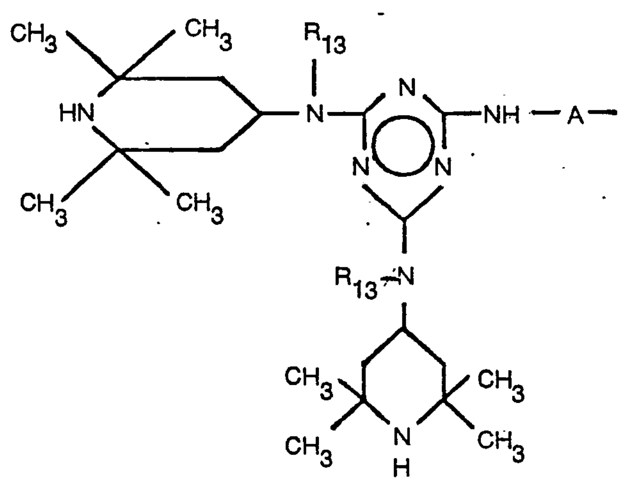

9. Use according to claim 1 of light stabilisers of the formula (VII)

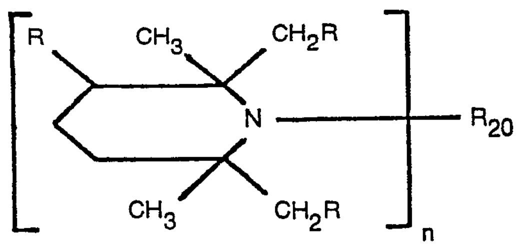

(VII)

wherein n is 1 or 2, R represents hydrogen or methyl, and $R_{20}$ if n is 1, represents $C_4$—$C_{18}$alkyl, $C_7$—$C_{12}$aralkyl, the group —CO—$R_{15}$, $C_1$—$C_4$alkyl substituted by —CN, —$COOR_{16}$, —OH, —$OCOR_{17}$, or

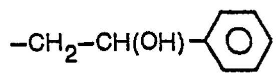

and $R_{15}$ represents $C_1$—$C_{12}$alkyl, $C_2$—$C_4$alkenyl or phenyl, $R_{16}$ $C_1$—$C_{18}$alkyl, $R_{17}$ represents $C_1$—$C_{18}$alkyl, $C_2$—$C_{10}$alkenyl, cyclohexyl, benzyl or $C_6$—$C_{10}$aryl, or $R_{14}$, if n is 2, represents $C_4$—$C_{12}$alkylene, but-2-en-1,4-ylene,xylylene, the groups

$$—(CH_2)_2—OOC—R_{18}—COO—(CH_2)_2—,$$

$$—CH_2—OOC—R_{19}—COO—CH_2—$$

or

$$—CH_2—CH(OH)—CH_2—O—R_{18}—O—CH_2—CH(OH)—CH_2—,$$

wherein $R_{18}$ represents $C_2$—$C_{10}$alkylene, phenylene, cyclohexylene or 2,2-diphenylenepropane, and $R_{19}$ represents $C_2$—$C_{10}$alkylene, xylylene or cyclohexylene.

10. Use according to claim 2 of light stabilisers of the formula (VIII)

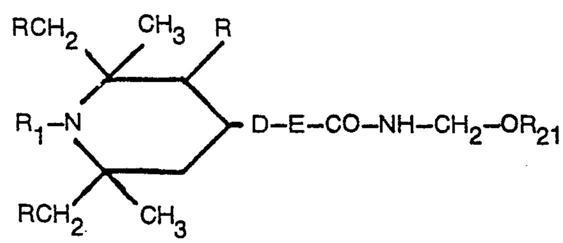

. (VIII)

wherein D is —N($R_{22}$)— or —O—, E is $C_1$—$C_3$alkylene, the —$CH_2$—CH($R_{23}$)—O— group, wherein $R_{23}$ is hydrogen, methyl or phenyl, the —$(CH_2)_3$—NH— group or a simple bond, R is hydrogen or methyl, $R_1$ is $C_1$—$C_{18}$alkyl, $C_3$—$C_8$alkenyl, $C_3$—$C_8$alkynyl, $C_7$—$C_{12}$aralkyl, $C_1$—$C_8$alkanoyl or $C_3$—$C_5$alkenoyl, $R_{21}$ is hydrogen or $C_1$—$C_{18}$alkyl, $R_{22}$ is hydrogen, $C_1$—$C_{18}$alkyl, $C_5$—$C_7$cycloalkyl, $C_7$—$C_{12}$aralkyl, cyanoethyl, $C_6$—$C_{10}$aryl, the —$CH_2$—CH($R_{23}$)—OH group, wherein $R_{23}$ is as defined above, a group of the formula

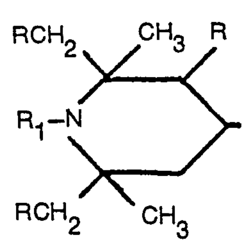

or a group of the formula

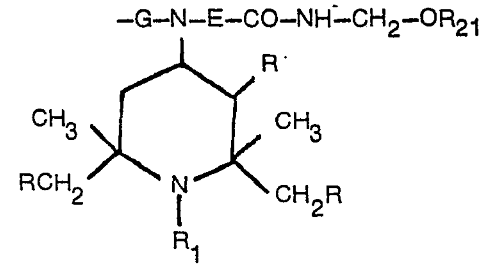

wherein G can be $C_2$—$C_6$alkylene or $C_6$—$C_{12}$arylene, or $R_{22}$ is a E—CO—NH—$CH_2$—$OR_{21}$ group.

11. Use according to claim 2, wherein polymeric compounds are used as light stabilisers, the recurring structural units of which contain a group of the formula I or are linked through a bivalent group corresponding to the formula I, wherein $R_1$ represents a free valency, and otherwise R and $R_1$ have the meanings given in claim 2, in particular polyesters, polyethers, polyamides, polyamines, polyurethanes, polyureas, Polyaminotriazines, poly(meth)acrylates, poly(methy)acrylamides and the copolymers thereof, which contain such radicals.

12. Use according to claim 2, wherein compounds are used as light stabilisers which contain in their molecule at least one 2-(2'-hydroxyphenyl)-benztriazole or 2-hydroxybenzophenone group and at least one polyalkylpiperidine group.

13. Use according to any one of the preceding claims, wherein an acid addition salt of a N-substituted 2,2,6,6-tetraalkylpiperidine compound is used.

14. Use according to any one of claims 1 to 12, wherein a complex of a N-substituted 2,2,6,6-tetraalkylpiperidine compound with a metal compound is used.

15. Use according to any one of the preceding claims, wherein the N-substituted 2,2,6,6-tetraalkylpiperidine compound is used in an amount of 0.1 to 5% by weight, based on the solvent-free binder (film-forming resin).

16. Use according to claim 15, wherein additionally other light stabilisers are used, the amount of which is chosen such that the sum of all light stabilisers is 0.2 to 5% by weight, based on the solvent-free binder (film-forming resin).

17. Use according to either of claims 15 or 16, wherein antioxidants, plasticisers, levelling agents, hardening catalysts, thickeners, dispersants or adhesion promoters are additionally added.

18. Use according to any one of the preceding claims for metallic effect finishes.

19. Use according to any one of claims 1 to 17 for solid shade finishes.

20. Use according to any one of the preceding claims for single-coat finishes.

21. Use according to any one of claims 1 to 19 for two-coat finishes.

22. Use according to any one of the preceding claims for retouching lacquers for automobiles.

23. Use according to any one of the preceding claims in lacquers with a high solids content for industrial finishes.

24. Use according to claim 1, wherein acid-catalysed stoving lacquers based on hot crosslinkable acrylic or alkyd resins are stabilised.

**Revendications**

1. Application de composés tétraalkyl-2,2,6,6 pipéridiniques substitués à l'azote, de leurs sels d'addition d'acides ou de leurs complexes avec des composés métalliques, éventuellement associés à d'autres stabilisants, pour la stabilisation de peintures-émail, catalysées par un acide, à base de résines acryliques, polyesters ou alkydes réticulables à la chaleur, contre l'action de la lumière, de l'humidité et de l'oxygène.

2. Application selon la revendication 1 de composés contenant un radical répondant à la formule I

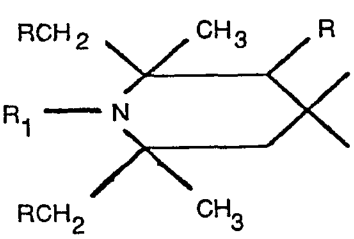

(I)

ou de polymères dont les motifs contiennent un radical de formule I ou sont reliés par un radical bivalent de formule I dans lequel $R_1$ désigne une valence libre, les symboles R et $R_1$ présents dans la formule I ayant par ailleurs les significations suivantes: R représente l'hydrogène ou un radical méthyle et $R_1$ représente un alkyle en $C_1$—$C_{18}$, un hydroxy-alkyle en $C_1$—$C_6$, un alcényle en $C_3$—$C_8$, un alcynyle

en $C_3$—$C_8$, un aralkyle en $C_7$—$C_{12}$ éventuellement porteur d'un groupe hydroxy sur sa partie alkyle, un alcanoyle en $C_1$—$C_8$ ou un alcénoyle en $C_3$—$C_5$.

3. Application selon la revendication 2 de stabilisants à la lumière répondant à la formule II

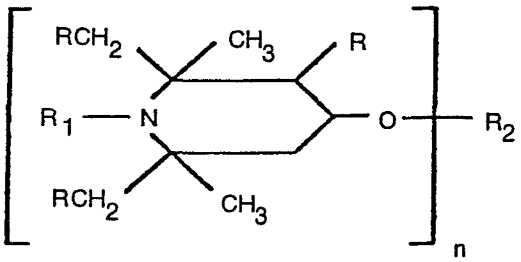

(II)

dans laquelle n désigne un nombre de 1 à 4, R représente l'hydrogène ou un méthyle, $R_1$ représente un alkyle en $C_1$—$C_{18}$, un hydroxyalkyle en $C_1$—$C_6$, un alcényle en $C_3$—$C_8$, un alcynyle en $C_3$—$C_8$, un aralkyle en $C_7$—$C_{12}$ éventuellement porteur d'un groupe hydroxy sur sa partie alkyle, un alcanoyle en $C_1$—$C_8$ ou un alcénoyle en $C_3$—$C_5$, et $R_2$ représente:

— lorsque n est égal à 1, l'hydrogène, un alkyle en $C_1$—$C_{12}$, un cyanéthyle, un benzyle, un glycidyle, un radical univalent provenant d'un acide carboxylique aromatique, araliphatique, cycloaliphatique ou aliphatique saturé ou insaturé, d'un acide carbamique ou d'un acide contenant du phosphore, ou un radical silyle monovalent,

— lorsque n est égal à 2, un alkylène en $C_2$—$C_{12}$, un alcénylène en $C_4$—$C_{12}$, un xylylène, un radical bivalent provenant d'un acide dicarboxylique aromatique, araliphatique, cycloaliphatique ou aliphatique saturé ou insaturé, d'un acide dicarbamique ou d'un acide contenant du phosphore, ou un radical silyle bivalent,

— lorsque n est égal à 3, un radical trivalent provenant d'un acide tricarboxylique aliphatique, cycloaliphatique ou aromatique, d'un acide tricarbamique aromatique ou d'un acide contenant du phosphore, ou un radical silyle trivalent, et

— lorsque n est égal à 4, un radical quadrivalent provenant d'un acide tétracarboxylique aliphatique, cycloaliphatique ou aromatique.

4. Application selon la revendication 3 de stabilisants à la lumière de formule II dans lesquels n désigne le nombre 1 ou le nombre 2, R représente l'hydrogène ou un méthyle, $R_1$ représente un alkyle en $C_1$—$C_{12}$, un allyle, un benzyle, un acétyle ou un acryloyle, et $R_2$ représente:

— lorsque n est égal à 1, un radical provenant d'un acide carboxylique aliphatique contenant de 2 à 18 atomes de carbone, d'un acide carboxylique cycloaliphatique en $C_5$—$C_{12}$ ou d'un acide carboxylique aromatique en $C_7$—$C_{15}$, et

— lorsque n est égal à 2, un radical provenant d'un acide dicarboxylique aliphatique contenant de 2 à 12 atomes de carbone, d'un acide dicarboxylique cycloaliphatique ou aromatique contenant de 8 à 14 atomes de carbone, ou d'un acide dicarbamique aliphatique, cycloaliphatique ou aromatique contenant de 8 à 14 atomes de carbone.

5. Application selon la revendication 2 de stabilisants à la lumière répondant à la formule III:

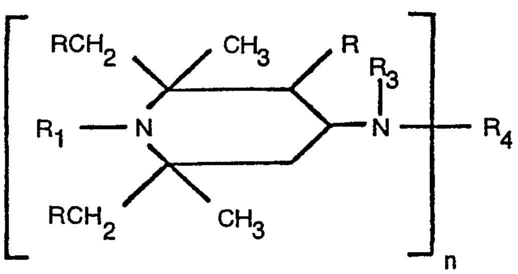

(III)

dans laquelle n désigne le nombre 1 ou le nombre 2, R représente l'hydrogène ou un méthyle, $R_1$ représente un alkyle en $C_1$—$C_{18}$, un hydroxyalkyle en $C_1$—$C_6$, un alcényle en $C_3$—$C_8$, un alcynyle en $C_3$—$C_8$, un aralkyle en $C_7$—$C_{12}$ éventuellement porteur d'un groupe hydroxy sur sa partie alkyle, un alcanoyle en $C_1$—$C_8$ ou un alcénoyle en $C_3$—$C_5$, $R_3$ représente un alkyle en $C_1$—$C_{12}$, un cycloalkyle en $C_5$—$C_7$, un aralkyle en $C_7$ ou $C_8$, un alcanoyle en $C_2$—$C_{18}$ ou un benzoyle, et $R_4$ représente:

— lorsque n est égal à 1, un alkyle en $C_1$—$C_{12}$, un cycloalkyle en $C_5$—$C_7$, un alkyle en $C_2$—$C_8$ éventuellement porteur d'un groupe cyano, carbonyle ou carbamoyle, un glycidyle, ou un radical —$CH_2$—CH(OH)—Z ou —CONH—Z dans lequel Z représente l'hydrogène, un méthyle ou un phényle, et

— lorsque n est égal à 2, un alkylène en $C_2$—$C_{12}$, un aralylène en $C_6$—$C_{12}$, un xylylène, un radical —$CH_2$—CH(OH)—$CH_2$—, un radical

$$—CH_2—CH(OH)—CH_2—O—X—O—CH_2—CH(OH)—CH_2—$$

dans lequel X représente un alkylène en $C_2—C_{10}$, un arylène en $C_6—C_{15}$ ou un cyclo-alkylène en $C_6—C_{12}$, ou encore $R_4$ représente, à condition que $R_3$ ne soit ni un alcanoyle ni un alcénoyle ni un benzoyle, un radical bivalent provenant d'un acide dicarboxylique aliphatique, cycloaliphatique ou aromatique ou d'un acide dicarbamique, ou

$R_3$ et $R_4$ forment ensemble, lorsque n est égal à 1, le radical cyclique d'un acide dicarboxylique-1,2 ou -1,3 aliphatique ou aromatique.

6. Application selon la revendication 2 de stabilisants à la lumière répondant à la formule IV

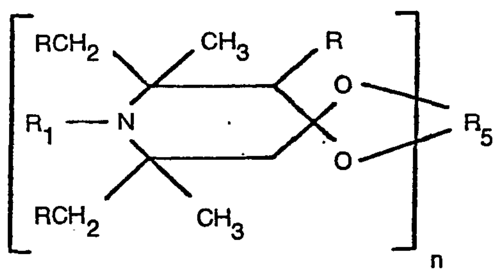

(IV)

dans laquelle n désigne le nombre 1 ou le nombre 2, R représente l'hydrogène ou un méthyle, $R_1$ représente un alkyle en $C_1—C_{18}$, un hydroxyalkyle en $C_1—C_6$, un alcényle en $C_3—C_8$, un alcynyle en $C_3—C_8$, un aralkyle en $C_7—C_{12}$ éventuellement porteur d'un groupe hydroxy sur sa partie alkyle, un alcanoyle en $C_1—C_8$, un alcénoyle en $C_3—C_5$, un glycidyle ou un radical $—CH_2CH(OH)—Z$ dans lequel Z désigne l'hydrogène, un méthyle ou un phényle, et $R_5$ représente, lorsque n est égal à 1, un alkylène ou hydroxy-alkylène en $C_2—C_8$ ou un acyloxy-alkylène en $C_4—C_{22}$, et, lorsque n est égal à 2, le radical $(—CH_2)_2C(CH_2—)_2$.

7. Application selon la revendication 2 de stabilisants à la lumière répondant à la formule V

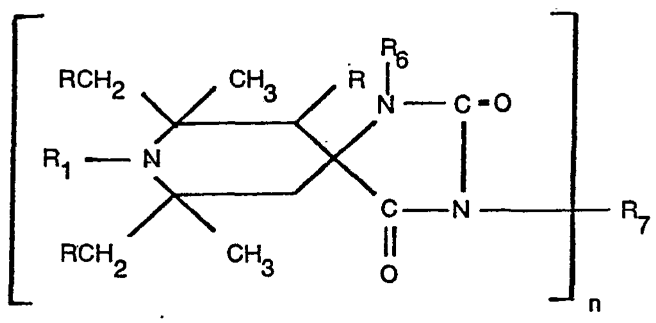

(V)

dans laquelle n désigne le nombre 1 ou le nombre 2, R représente l'hydrogène ou un méthyle, $R_1$ représente un alkyle en $C_1—C_{18}$, un hydroxyalkyle en $C_1—C_6$, un alcényle en $C_3—C_8$, un alcynyle en $C_3—C_8$, un aralkyle en $C_7—C_{12}$ éventuellement porteur d'un groupe hydroxy sur sa partie alkyle, un alcanoyle en $C_1—C_8$ ou un alcénoyle en $C_3—C_5$, $R_6$ représente l'hydrogène, un alkyle en $C_1—C_{12}$, un allyle, un benzyle, un glycidyle ou un alcoxyalkyle en $C_2—C_6$, et $R_7$ représente, lorsque n est égal à 1, l'hydrogène, un alkyle en $C_1—C_{12}$, un glycidyle, un alcényle en $C_3—C_5$, un aralkyle en $C_7—C_9$, un cyclo-alkyle en $C_5—C_7$, un hydroxyalkyle en $C_2—C_4$, un alcoxyalkyle en $C_2—C_6$ ou un aryle en $C_6—C_{10}$ et, lorsque n est n est égal à 2, un alkylène en $C_2—C_{12}$, un arylène en $C_6—C_{12}$ ou un radical: $—CH_2CH(OZ')CH_2—[OCH_2—CH(OZ')CH_2]_2—$ dans lequel Z' désigne l'hydrogène, un alkyle en $C_1—C_{18}$, un allyle, un benzyle, un alcanoyle en $C_2—C_{12}$ ou un benzoyle.

8. Application selon la revendication 2 de stabilisants à la lumière répondant à la formule VI

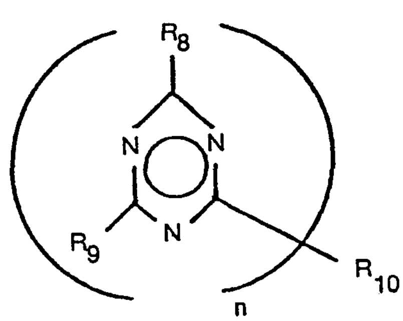

(VI)

dans laquelle
n désigne le nombre 1 ou le nombre 2,
$R_8$ représente un radical répondant à la formule:

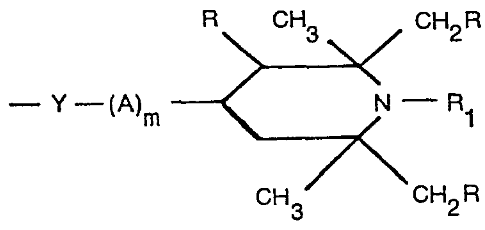

dans laquelle
R représente l'hydrogène ou un méthyle, $R_1$ un alkyle en $C_1$—$C_{18}$, un hydroxyalkyle en $C_1$—$C_6$, un alcényle en $C_3$—$C_8$, un alcynyle en $C_3$—$C_8$, un aralkyle éventuellement porteur d'un groupe hydroxy sur sa partie alkyle, un alcanoyle en $C_1$—$C_8$ ou un alcénoyle en $C_3$—$C_5$, Y représente —O— ou —$NR_{11}$—, A représente un alkylène en $C_2$—$C_6$ et m désigne le nombre 0 ou le nombre 1,
$R_9$ représente un radical $R_8$, —$NR_{11}R_{12}$, —$OR_{13}$, —$NHCH_2OR_{13}$ ou —$N(CH_2OR_{13})_2$,
$R_{10}$ représente, lorsque n est égal à 1, un radical $R_8$ ou $R_9$ et, lorsque n est égal à 2, un radical —Y—Q—Y— dans lequel Q désigne un alkylène en $C_2$—$C_6$ éventuellement interrompu par un groupe —$N(R_{14})$—,
$R_{11}$ représente un alkyle en $C_1$—$C_{12}$, un cyclohexyle, un benzyle, un hydroxy-alkyle en $C_1$—$C_4$ ou un radical de formule:

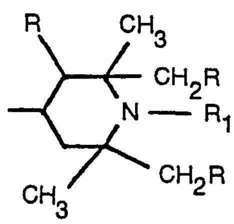

$R_{12}$ représente un alkyle en $C_1$—$C_{12}$, un cyclohexyle, un benzyle ou un hydroxy-alkyle en $C_1$—$C_4$, $R_{13}$ représente l'hydrogène, un alkyle en $C_1$—$C_{12}$ ou un phényle, et $R_{14}$ représente l'hydrogène ou un radical —$CH_2OR_{13}$, ou $R_{11}$ et $R_{12}$ forment ensemble un alkylène en $C_4$ ou $C_5$ ou un oxa-alkylène, ou encore $R_{11}$ et $R_{12}$ représentent chacun un radical de formule:

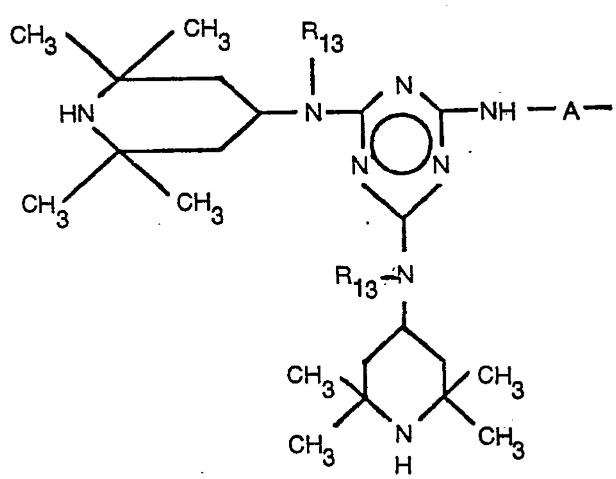

9. Application selon la revendication 1 de stabilisants à la lumière répondant à la formule VII

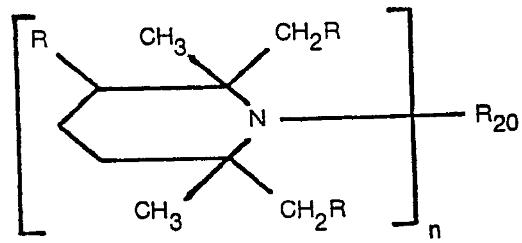

(VII)

dans laquelle n désigne le nombre 1 ou le nombre 2, R représente l'hydrogène ou un méthyle et $R_{20}$ représente:

— lorsque n est égal à 1, un alkyle en $C_4$—$C_{18}$, un aralkyle en $C_7$—$C_{12}$, un radical —CO—$R_{15}$ ou un alkyle en $C_1$—$C_4$ porteur d'un groupe —CN, —$COOR_{16}$, —OH, —$OCOR_{17}$ ou

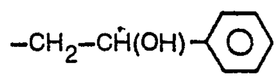

$R_{15}$ désignant un alkyle en $C_1$—$C_{12}$, un alcényle en $C_2$—$C_4$ ou un phényle, $R_{16}$ un alkyle en $C_1$—$C_{18}$ et $R_{17}$ un alkyle en $C_1$—$C_{18}$, un alcényle en $C_2$—$C_{10}$, un cyclohexyle, un benzyle ou un aryle en $C_6$—$C_{10}$, ou

— lorsque n est égal à 2, un alkylène en $C_4$—$C_{12}$, un butène-2 ylène-1,4, un xylylène ou un radical répondant à l'une des formules:

$$—(CH_2)_2—OOC—R_{18}—COO—(CH_2)_2—,$$

$$—CH_2—OOC—R_{19}—COO—CH_2— \text{ et}$$

$$—CH_2—CH(OH)—CH_2—O—R_{18}—O—CH_2—CH(OH)—CH_2—$$

dans lesquelles $R_{18}$ représente un alkylène en $C_2$—$C_{10}$, un phénylène, un cyclohexylène ou un diphénylène -2,2 propane et $R_{19}$ un alkylène en $C_2$—$C_{10}$, un xylylène ou un cyclohexylène.

10. Application selon la revendication 2 de stabilisants à la lumière répondant à la formule VIII

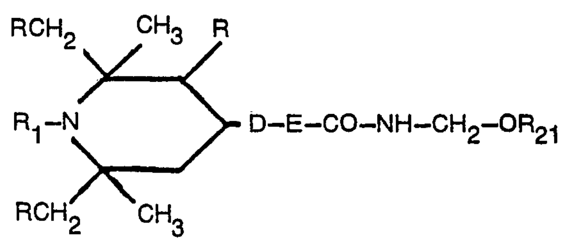

(VIII)

dans laquelle D représente —N($R_{22}$)— ou —O—, E représente un alkylène en $C_1$—$C_3$, un radical —$CH_2$—CH($R_{23}$)—O— dans lequel $R_{23}$ représente l'hydrogène, un méthyle ou un phényle, le radical —$(CH_2)_3$—NH— ou une liaison simple, R représente l'hydrogène ou un méthyle, $R_1$ représente un alkyle en $C_1$—$C_{18}$, un alcényle en $C_3$—$C_8$, un alcynyle en $C_3$—$C_8$, un aralkyle en $C_7$—$C_{12}$, un alcanoyle en $C_1$—$C_8$ ou un alcénoyle en $C_3$—$C_5$, $R_{21}$ représente l'hydrogène ou un alkyle en $C_1$—$C_{18}$, $R_{22}$ représente l'hydrogène, un alkyle en $C_1$—$C_{18}$, un cycloalkyle en $C_5$—$C_7$, un aralkyle en $C_7$—$C_{12}$, un cyanéthyle, un aryle en $C_6$—$C_{10}$, un radical —$CH_2$—CH($R_{23}$)—OH dans lequel $R_{23}$ a la signification qui vient d'être donnée, un radical de formule

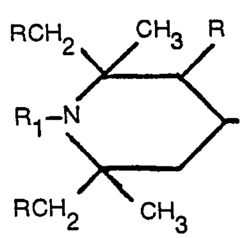

ou un radical répondant à la formule:

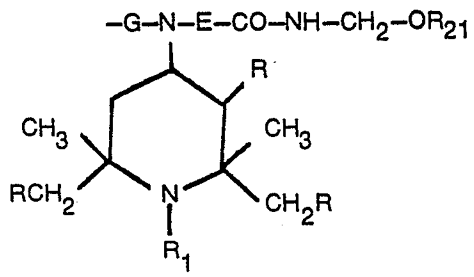

dans laquelle G peut représenter un alkylène en $C_2$—$C_6$ ou un arylène en $C_6$—$C_{12}$, ou encore $R_{22}$ représente un radical —E—CO—NH—$CH_2$—$OR_{21}$.

11. Application selon la revendication 2, caractérisée en ce qu'on utilise, comme stabilisants à la lumière, des composés polymères dont les motifs contiennent un radical de formule I ou sont reliés par un radical bivalent répondant à la formule I dans laquelle $R_1$ représente une valence libre, les symboles R et $R_1$ ayant par ailleurs les significations données à la revendication 2, plus particulièrement des polyesters, des polyéthers, des polyamides, des polyamines, des polyuréthannes, des polyurées, des polyaminotriazines, des polyacrylates, des polyméthacrylates, des polyacrylamides, des polyméthacrylamides et leurs copolymères, qui contiennent de tels radicaux.

12. Application selon la revendication 2, caractérisée en ce qu'on utilise, comme stabilisants à la lumière, des composés qui contiennent, dans leur molécule, au moins un radical d'(hydroxy-2 phényl)-2 benzotriazole ou d'hydroxy-2 benzophénone et au moins un radical polyalkylpipéridinique.

13. Application selon l'une quelconque des revendications précedentes, caractérisée en ce qu'on utilise un sel formé par addition entre en acide et un composé tétraalkyl-2,2,6,6 pipéridinique substitué à l'azote.

14. Application selon l'une quelconque des revendications 1 à 12, caractérisée en ce qu'on utilise un complexe formé par un composé métallique avec un composé tétraalkyl-2,2,6,6 pipéridinique substitué à l'azote.

15. Application selon l'une quelconque des revendications précédentes, caractérisée en ce qu'on utilise le composé tétraalkyl-2,2,6,6 pipéridinique substitué à l'azote en une quantité comprise entre 0,1 et 5% en poids par rapport au feuillogène (résine pour peintures) dépourvu de solvant.

16. Application selon la revendication 15, caractérisée en ce qu'on utilise, en plus, d'autres stabilisants à la lumière dont la quantité est choisie de telle façon que la somme des quantités de tous les stabilisants à la lumière représente de 0,2 à 5% en poids par rapport au feuillogène (résine pour peintures) dépourvu de solvant.

17. Application selon l'une des revendications 15 et 16, caractérisée en ce qu'on ajoute, comme additifs supplémentaires, des anti-oxydants, des plastifiants, des agents de nivellement, des accélérateurs de durcissement, des épaississants, des dispersants ou des substances améliorant l'adhérence.

18. Application selon l'une quelconque des revendications précédentes pour la réalisation de peintures à effet de métallisation.

19. Application selon l'une quelconque des revendications 1 à 17 pour la réalisation de peintures unies.

20. Application selon l'une quelconque des revendications précédentes pour la réalisation de peintures à une seule couche.

21. Application selon l'une quelconque des revendications 1 à 19 pour la réalisation de peintures à deux couches.

22. Application selon l'une quelconque des revendications précédentes pour la réalisation de peintures de réparation d'automobiles.

23. Application selon l'une quelconque des revendications précédentes dans des peintures à haute teneur en matières solides pour la branche des peintures industrielle.

24. Application selon la revendication 1, caractérisée en ce qu'on stabilise des peintures et vernis émail catalysés par un acide, à base de résines acryliques ou alkydes réticulables à chaud.